# EUROPÄISCHE PATENTSCHRIFT

(11) **EP 4 196 325 B1**
(45) Veröffentlichungstag und Bekanntmachung des Hinweises auf die Patenterteilung: **02.10.2024**
(21) Anmeldenummer: 21763294.2
(22) Anmeldetag: 12.08.2021
(51) Int. Cl.: B28B 1/00, B28B 5/02, B28B 5/04, B28B 7/18, B28B 17/00, B28B 19/00, B28B 23/02, B33Y 10/00, B33Y 30/00, B28B 13/02

(54) **ANLAGE ZUR HERSTELLUNG EINES, VORZUGSWEISE FLÄCHIGEN, BETONFERTIGBAUELEMENTS**
PLANT FOR PRODUCING A, PREFERABLY FLAT, CONCRETE PREFABRICATED COMPONENT
INSTALLATION POUR PRODUIRE UN ÉLÉMENT DE CONSTRUCTION PRÉFABRIQUÉ EN BÉTON, DE PRÉFÉRENCE PLAN

(30) Priorität: 13.08.2020 AT 506792020
(43) Veröffentlichungstag der Anmeldung: 21.06.2023
(73) Patentinhaber: Progress Maschinen & Automation AG, 39042 Brixen (IT)
(72) Erfinder: GALLMETZER, Andreas, Kaltern 39052 (IT); ENDERES, Karl, 39042 Brixen (IT)
(74) Vertreter: Torggler & Hofmann Patentanwälte - Innsbruck
(86) Internationale Anmeldenummer: PCT/EP2021/072529
(87) Internationale Veröffentlichungsnummer: WO 2022/034185

(56) Entgegenhaltungen:
- WO-A1-2019/197088
- WO-A1-2019/197088
- WO-A1-2020/011734
- WO-A1-2020/011734
- DE-A1- 102014 011 420
- DE-A1- 102014 011 420
- FR-A1- 3 083 472
- US-A1- 2005 280 185
- US-A1- 2005 280 185
- US-A1- 2017 129 134
- US-A1- 2017 129 134
- US-A1- 2018 126 668
- US-A1- 2018 126 668

## Beschreibung

Die Erfindung betrifft eine Anlage zur Herstellung eines, vorzugsweise flächigen, Betonfertigbauelements, umfassend mehrere Stationen, die von wenigstens einer Produktionspalette, insbesondere umlaufend, durchlaufen werden kann, wobei die Anlage wenigstens ein Transportsystem, mit welchem die wenigstens eine Produktionspalette durch die Anlage transportierbar ist. Die Erfindung betrifft weiterhin ein Verfahren zur Herstellung eines, vorzugsweise flächigen, Betonfertigbauelements mittels einer solchen Anlage.

Aus dem Stand der Technik sind Umlaufanlagen bekannt, bei denen Nassbeton mit Hilfe von Schalelementen zu Betonfertigbauelementen verarbeitet wird. Die Verwendung der Schalelemente ist mit einer Reihe von Nachteilen verbunden: Es müssen nicht nur Seitenflächen eines herzustellenden Betonfertigbauelements mit Schalelementen begrenzt werden, sondern z.B. auch Fensteraussparungen mittels spezieller Einbaurahmen. Außerdem sind Nachschalarbeiten notwendig. Die in Zusammenhang mit den Schalstationen zum Einsatz kommenden Stationen der Umlaufanlage, wie z.B. Schalungsroboter, sind teuer und aufwändig. Die mit Schalungen realisierbaren Formen sind begrenzt. Einige Formen, die eigentlich wünschenswert wären, lassen sich gar nicht realisieren.

Weitere Nachteile der aus dem Stand der Technik bekannten Umlaufanlagen bestehen darin, dass häufig nicht recyclebares Material verwendet wird, welches entsorgt werden muss. Ausnehmungen für Elektro- und Sanitäreinrichtungen können, wenn überhaupt, nur mit einem sehr großen Aufwand während der Herstellung eines Betonfertigbauelements realisiert werden. Die notwendigen Verdichtungsprozesse sind oft mit einer hohen Lärmbelastung verbunden.

Neben den klassischen Anlagen, bei denen Nassbeton verarbeitet wird, gibt es Ansätze aus dem Stand der Technik, die auf der Methode der Selective Cement Activation (SCA) basieren. Diese Ansätze weisen allerdings auch eine Reihe von Nachteilen auf: Ein zu verarbeitendes Grundmaterial muss mit einer Binderkomponente vermischt werden. Ein im Zuge eines Druckprozesses nicht verfestigtes Grundmaterial kann dann in weiterer Folge aber nicht ohne weiteres weiter verwendet werden. Manche Materialien, wie z.B. Isoliermaterialien, sind gar nicht verwendbar. Bei den verwendbaren Materialien kommt es in der Regel zu einer ungünstigen Staubentwicklung, welche eine komplexe Entpackungsstation mit Absaugsystemen erfordert. Weiterhin sind die gedruckten Bauteile bei der Verarbeitung von Sorelzement nicht wasserbeständig und weisen eine im Vergleich zu Beton geringe und damit in vielen Fällen unzureichende Festigkeit auf. Und schließlich müssen für die gedruckten Bauteile eigens Zulassungen eingeholt werden, da sie die vorhandenen Normen aufgrund der verwendeten Grundmaterialien nicht erfüllen.

Eine gattungsgemäße Anlage ist bereits aus der Schrift US 2018/126668 A1 bekannt.

Die Aufgabe der vorliegenden Erfindung besteht darin, diese Nachteile zumindest teilweise zu beheben und eine gegenüber dem Stand der Technik verbesserte Anlage zur Herstellung eines, vorzugsweise flächigen, Betonfertigbauelements anzugeben, bei welcher insbesondere auf die Verwendung von Schalelementen verzichtet werden kann. Außerdem soll ein gegenüber dem Stand der Technik verbessertes Verfahren zur Herstellung eines, vorzugsweise flächigen, Betonfertigbauelements mittels einer solchen Anlage angegeben werden.

Diese Aufgabe wird gelöst durch die Merkmale der Ansprüche 1 und 13.

Bei der erfindungsgemäßen Anlage ist es demnach vorgesehen, dass die Anlage
- wenigstens eine 3D-Druckstation mit wenigstens einer Schichtablagevorrichtung zur schichtweisen Ablage wenigstens eines partikelförmigen Zuschlagstoffs auf der wenigstens einen Produktionspalette und wenigstens einem Druckkopf zur gesteuerten Abgabe wenigstens eines Wasser-Bindemittel-Gemischs, umfassend Wasser und wenigstens ein hydraulisches Bindemittel, insbesondere ein zementöses Bindemittel, an wenigstens einem örtlich vorbestimmten Bereich der Produktionspalette und/oder einer von der wenigstens einen Schichtablagevorrichtung auf der Produktionspalette abgelegten Schicht des wenigstens einen Zuschlagstoffs,
- wenigstens eine Speichervorrichtung, in welcher der wenigstens eine partikelförmige Zuschlagstoff gespeichert ist,
- wenigstens eine Fördervorrichtung, mit welcher der wenigstens eine in der wenigstens einen Speichervorrichtung gespeicherte partikelförmige Zuschlagstoff zur wenigstens einen Schichtablagevorrichtung der wenigstens eine 3D-Druckstation beförderbar ist,
- das wenigstens eine Wasser-Bindemittel-Gemisch, wobei das wenigstens eine Wasser-Bindemittel-Gemisch Wasser und wenigstens ein hydraulisches Bindemittel, insbesondere ein zementöses Bindemittel, aufweist,
- wenigstens eine Mischvorrichtung, mit welcher das wenigstens eine Wasser-Bindemittel-Gemisch bereitstellbar ist,
- wenigstens eine Zuführvorrichtung, mit welcher das wenigstens eine von der wenigstens einen Mischvorrichtung bereitgestellte wenigstens eine Wasser-Bindemittel-Gemisch dem wenigstens einen Druckkopf der wenigstens einen 3D-Druckstation zuführbar ist, und
- wenigstens eine Entpackungsstation, in welcher ein in der wenigstens einen 3D-Druckstation auf der wenigstens einen Produktionspalette gedrucktes Betonfertigbauelement von einem nichtgebundenen partikelförmigen Zuschlagstoff entpackbar ist,
umfasst.

Gegenüber den aus dem Stand der Technik bekannten Anlagen, bei denen Nassbeton mit Hilfe von Schalelementen zu Betonfertigbauelementen verarbeitet wird, weist die erfindungsgemäße Anlage eine Reihe von Vorteilen auf:
- teure und aufwändige Stationen, wie Schalungsroboter, und die dazugehörigen Schalungsteile und Magnete können entfallen
- flächige Elemente, wie Wandelemente oder Deckenelemente, können passgenau und ohne Schalaufwand hergestellt werden
- Fensteraussparungen können ohne Schalungsaufwand realisiert werden
- es lassen sich beliebige Freiformen realisieren
- Nachschalarbeiten und die Verwendung von nicht recyclingbarem Material können vollständig entfallen
- Öffnungen und Schlitze, gedruckte "Rohre" und gedruckte "Dosen" für Elektro- und Sanitäreinrichtungen können direkt eingeplant werden ohne zusätzlichen Aufwand und den Einsatz von Kunststoffen
- gewichtsreduzierende Hohlräume können direkt gedruckt werden
- es ist kein zusätzliches Verdichten nötig, da die Auftragung des partikelförmigen Zuschlagstoffes schichtweise erfolgt
- es sind ein niedriger Wasser- und Zementfaktor möglich, was einen minimalen Verbrauch an Zement zur Folge hat
- die Produktion kann auf einer fahrbaren Produktionspalette erfolgen
- alternativ oder ergänzend dazu ist eine Produktion möglich, bei welcher mehrere Produktionspaletten in Serie bereitgestellt werden und der wenigstens eine Druckkopf und die wenigstens eine Schichtablagevorrichtung über die Produktionspaletten hinweg bewegt werden
- genauso gut ist die Produktion auf einer langen Bahn möglich, wobei auch in diesem Fall der wenigstens eine Druckkopf und die wenigstens eine Schichtablagevorrichtung über die Produktionspaletten hinweg bewegt werden
- es kann eine Produktion im Rahmen einer Umlaufanlage realisiert werden, wodurch Trockenregale, Abhubstationen mit und ohne Kippvorrichtung, Reinigungsstation, Einölstation aus dem Standardprogramm eines Umlauflieferanten und Standardleit- und Steuerungssysteme einer Umlaufanlage zur Verwendung kommen können
- der Automatisierungsgrad kann weiter gesteigert werden, und zwar vom Design bis zur Produktion
- die Planung eines Betonfertigbauelement gestaltet sich einfacher, da eine volldigitalisierte Planung für eine Losgröße 1 möglich ist
- aufwändige Arbeitsvorbereitungen entfallen
- es wird weniger Lagerplatz für Gebrauchsmaterialien benötigt

Gegenüber der Verwendung eines SCA-Druckers weist die erfindungsgemäße Anlage ebenfalls eine Reihe von Vorteilen auf:
- das Pulverbett besteht nur aus partikelförmigen Zuschlagstoffen, wie z.B. Sand, Ziegelsplitt, Liapor, Blähton, welche in der Bauindustrie sein Jahrzehnten bekannt sind
- es können einfach verschiedene Materialien, wie z.B. Isoliermaterialien, verwendet werden
- das Grundmaterial wird nicht mit einem Binder vermischt, was zur Folge hat, das ein nicht gebundenes Material einfach wiederverwendet werden kann
- das Wasser-Bindemittel-Gemisch wird selektiv aufgetragen, nicht aktiviert
- kommt beim Wasser-Bindemittel-Gemisch Zement zum Einsatz, so können Reste einfach wieder gebrochen, gesiebt und verwendet werden
- das zur Verfügung stehende Druckvolumen muss nicht optimal gefüllt werden
- eine komplexe Entpackungsstation mit Absaugsystemen ist nicht nötig, da die Staubentwicklung signifikant geringer ist
- ein Auftragen einer oder mehrerer ersten und letzten Schichten des Wasser-Bindemittel-Gemischs eröffnet die Möglichkeit von glatten Flächen, die ansonsten nur mittels einer Schalung oder durch ein Abziehen, keinesfalls aber mittels eines SCA-Druckers, realisierbar sind
- die verwendbaren partikelförmigen Zuschlagstoffe sind resistent gegenüber Wasser
- die herstellbaren Bauteile weisen eine deutlich höhere Festigkeit auf
- es kann Portlandzement verwenden werden, sodass gültige Zulassungen und Normen genutzt werden können
- die Materialkosten sind geringer

Vorteilhafte Ausführungsformen der Anlage zur Herstellung eines, vorzugsweise flächigen, Betonfertigbauelements sind in den abhängigen Ansprüche 2 bis 12 definiert.

Wie eingangs ausgeführt, wird Schutz auch begehrt für ein Verfahren zur Herstellung eines, vorzugsweise flächigen, Betonfertigbauelements mittels einer erfindungsgemäßen Anlage, wobei das Verfahren die folgenden Verfahrensschritte umfasst:
- in der wenigstens einen 3D-Druckstation wird in einem ersten Druckverfahrensschritt mittels der wenigstens einen Schichtablagevorrichtung wenigstens eine Schicht des wenigstens einen partikelförmigen Zuschlagstoffs auf der Produktionspalette abgelegt und in einem zweiten Druckverfahrensschritt mittels des wenigstens einen Druckkopfs eine vorbestimmte Dosis des wenigstens einen Wasser-Bindemittel-Gemischs an wenigstens einem örtlich vorbestimmten Bereich der wenigstens einen Schicht des wenigstens einen Zuschlagstoffs abgegeben, vorzugsweise wobei die beiden Druckverfahrensschritte wiederholt und/oder in umgekehrter Reigenfolge durchgeführt werden,
- der wenigstens eine partikelförmige Zuschlagstoff wird aus der wenigstens einen Speichervorrichtung mittels der wenigstens einen Fördervorrichtung zur wenigstens einen Schichtablagevorrichtung der wenigstens eine 3D-Druckstation befördert,
- das wenigstens eine Wasser-Bindemittel-Gemisch wird in der wenigstens einen Mischvorrichtung bereitgestellt und mittels der wenigstens einen Zuführvorrichtung dem wenigstens einen Druckkopf der wenigstens einen 3D-Druckstation zugeführt,
- die wenigstens eine Produktionspalette wird mittels des wenigstens einen Transportsystems von der wenigstens einen 3D-Druckstation zur wenigstens einen Entpackungsstation transportiert, und
- ein in der wenigstens einen 3D-Druckstation auf der wenigstens einen Produktionspalette gedrucktes Betonfertigbauelement wird in der wenigstens einen Entpackungsstation von einem nichtgebundenen partikelförmigen Zuschlagstoff entpackt.

Vorteilhafte Ausführungsformen dieses Verfahrens sind in den abhängigen Ansprüche 14 bis 15 definiert.

Weitere Einzelheiten und Vorteile der Erfindung werden anhand der Figurenbeschreibung unter Bezugnahme auf die Zeichnungen im Folgenden näher erläutert. Darin zeigen:
- Fig. 1: ein erstes Ausführungsbeispiel einer Anlage zur Herstellung eines Betonfertigbauelements in einer schematisch dargestellten Ansicht,
- Fig. 2: ein erstes Ausführungsbeispiel einer 3D-Druckstation in einer schematisch dargestellten perspektivischen Ansicht,
- Fig. 3a, b: zwei weitere Ausführungsbeispiele einer 3D-Druckstation in einer schematisch dargestellten Draufsicht,
- Fig. 4a, b: zwei weitere Ausführungsbeispiele einer Anlage zur Herstellung eines Betonfertigbauelements in schematisch dargestellten Ansichten,
- Fig. 5: Schema eines weiteren Ausführungsbeispiels einer 3D-Druckstation mit den dazugehörigen Versorgungskreisläufen in einer schematisch dargestellten Ansicht,
- Fig. 6: Schema eines ersten Ausführungsbeispiels eines Druckbalkens in einer schematisch dargestellten Ansicht,
- Fig. 7a - d: ein erstes Ausführungsbeispiel eines Verfahrens zum Herstellen eines 3D-gedruckten
- Fig. 8: Fertigteils für die Bauindustrie in schematisch dargestellten perspektivischen Ansichten, ein weiteres Ausführungsbeispiel eines gedruckten Betonfertigbauelements in einer schematisch dargestellten perspektivischen Ansicht,
- Fig. 9a, b: weitere Ausführungsbeispiele eines gedruckten Betonfertigbauelements in schematisch dargestellten perspektivischen Ansichten,
- Fig. 10: ein weiteres Ausführungsbeispiel eines gedruckten Betonfertigbauelements in Form einer Doppelwand in einer schematisch dargestellten perspektivischen Ansicht,
- Fig. 11: ein weiteres Ausführungsbeispiel eines gedruckten Betonfertigbauelements mit einer Isolierschicht in einer schematisch dargestellten perspektivischen Ansicht,
- Fig. 12: ein weiteres Ausführungsbeispiel eines gedruckten Betonfertigbauelements mit gedruckten Aussparungen und Unterputzrohren für Elektroleitungen in einer schematisch dargestellten perspektivischen Ansicht,
- Fig. 13a, b: ein erstes Ausführungsbeispiel einer Produktionspalette in einer schematisch dargestellten Draufsicht,
- Fig. 14a, b: ein weiteres Ausführungsbeispiel einer Produktionspalette in einer schematisch dargestellten Draufsicht Teilfigur a und in einer Querschnittsansicht von der Seite Teilfigur b,
- Fig. 15: ein weiteres Ausführungsbeispiel einer Produktionspalette mit zwei bedruckten Bereichen in einer schematisch dargestellten Draufsicht,
- Fig. 16: ein weiteres Ausführungsbeispiel einer Produktionspalette und einer Schichtablagevorrichtung in einer schematisch dargestellten Querschnittsansicht von der Seite,
- Fig. 17: ein weiteres schematisch dargestelltes Ausführungsbeispiel eines Betonfertigbauelements in einer perspektivischen Ansicht,
- Fig. 18: ein Ausführungsbeispiel eines Druckbalkens und einer Schichtablagevorrichtung einer 3D-Druckstation in einer schematisch dargestellten Querschnittsansicht von der Seite,
- Fig. 19: ein schematisch dargestelltes Ausführungsbeispiel eines Druckkopfes zur gesteuerten Abgabe eines Wasser-Bindemittel-Gemischs in einer perspektivischen Ansicht,
- Fig. 20a: das Ausführungsbeispiel des in Fig. 19 dargestellten Druckkopfes, wobei ein erster Teilkörper eines Wechselkörpers ausgeblendet wurde,
- Fig. 20b: das Ausführungsbeispiel des in Fig. 19 dargestellten Druckkopfes, wobei ein erster und ein zweiter Teilkörper eines Wechselkörpers ausgeblendet wurden,

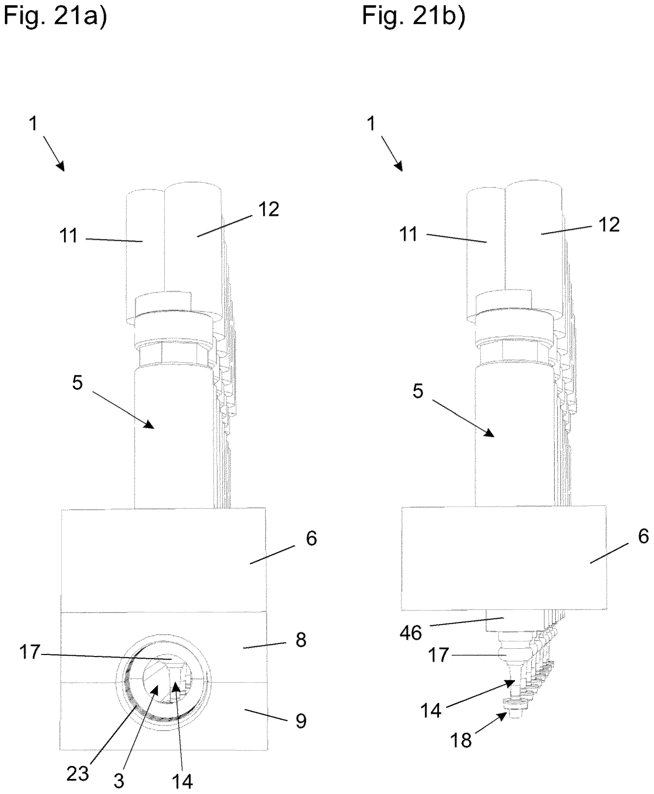

- Fig. 21a: das Ausführungsbeispiel des in Fig. 19 dargestellten Druckkopfes in einer perspektivischen Seitenansicht,
- Fig. 21b: das Ausführungsbeispiel des in Fig. 21a dargestellten Druckkopfes, wobei ein erster und ein zweiter Teilkörper eines Wechselkörpers ausgeblendet wurden,
- Fig. 22a: ein schematisch dargestelltes Ausführungsbeispiel einer Anordnung mit einem Wasser-Bindemittel-Gemisch, umfassend Wasser und wenigstens ein hydraulisches Bindemittel, insbesondere ein zementöses Bindemittel, und einem Druckkopf zur gesteuerten Abgabe des Wasser-Bindemittel-Gemischs in einer Querschnittsansicht entlang einer Querschnittsebene parallel zu einer Längsachse des Druckkopfes,
- Fig. 22b: das Ausführungsbeispiel des in Fig. 19 dargestellten Druckkopfes in einer Querschnittsansicht entlang einer Querschnittsebene senkrecht zu einer Längsachse des Druckkopfes,
- Fig. 23: ein schematisch dargestelltes Ausführungsbeispiel eines Ventils eines Druckkopfes zur gesteuerten Abgabe eines Wasser-Bindemittel-Gemischs in einer perspektivischen Ansicht,
- Fig. 24a, b: eine isolierte Darstellung einer Ventilstange des in Fig. 23 dargestellten Ventils und eines Düsenkörpers, wobei sich die Ventilstange und der Düsenkörper in der Teilfigur a kontaktieren und die Ventilstange und der Düsenkörper in der Teilfigur b voneinander beabstandet sind,
- Fig. 25: eine isolierte Darstellung einer Ventilstange des in Fig. 23 dargestellten Ventils, und
- Fig. 26: eine isolierte Darstellung eines Düsenkörpers des in Fig. 23 dargestellten Ventils.

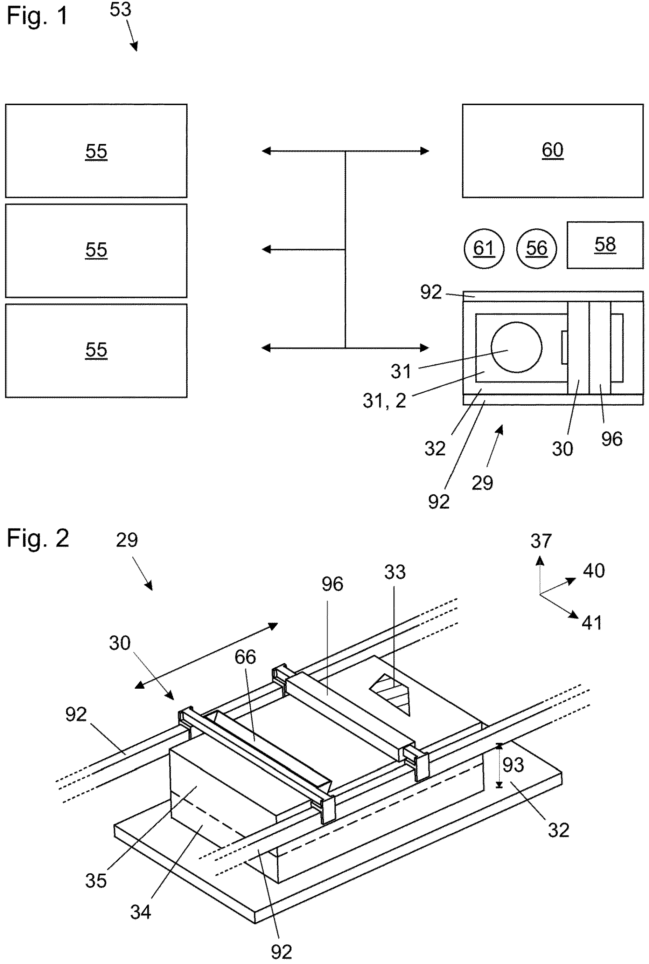

Die Figur 1 zeigt ein erstes Ausführungsbeispiel einer Anlage 53 zur Herstellung eines, vorzugsweise flächigen, Betonfertigbauelements 54, umfassend mehrere Stationen, die von wenigstens einer Produktionspalette 32 durchlaufen werden kann, wobei die Anlage 53 wenigstens ein Transportsystem, mit welchem die wenigstens eine Produktionspalette 32 durch die Anlage 53 transportierbar ist, umfasst. Die dabei zurück gelegten Transportwege zwischen den Stationen sind mit Pfeilen angedeutet.

Die Anlage 53 umfasst weiterhin wenigstens eine 3D-Druckstation 29 mit wenigstens einer Schichtablagevorrichtung 30 zur schichtweisen Ablage wenigstens eines partikelförmigen Zuschlagstoffs 31 auf der wenigstens einen Produktionspalette 32 und wenigstens einem Druckkopf 1 zur gesteuerten Abgabe wenigstens eines Wasser-Bindemittel-Gemischs 2, umfassend Wasser und wenigstens ein hydraulisches Bindemittel, insbesondere ein zementöses Bindemittel, an wenigstens einem örtlich vorbestimmten Bereich 33 der Produktionspalette 32 und/oder einer von der wenigstens einen Schichtablagevorrichtung 30 auf der Produktionspalette 32 abgelegten Schicht 34, 35, 36 des wenigstens einen Zuschlagstoffs 31.

Es ist wenigstens eine Speichervorrichtung 56 vorgesehen, in welcher der wenigstens eine partikelförmige Zuschlagstoff 31 gespeichert ist.

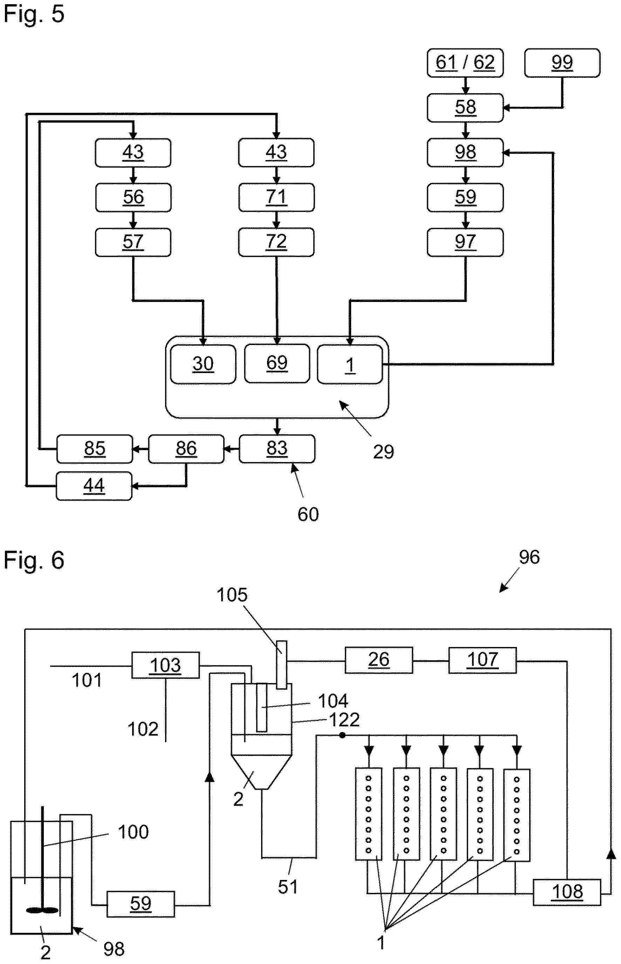

Wie aus der Fig. 5 hervorgeht, kann wenigstens eine Fördervorrichtung 57, mit welcher der wenigstens eine in der wenigstens einen Speichervorrichtung 56 gespeicherte partikelförmige Zuschlagstoff 31 zur wenigstens einen Schichtablagevorrichtung 30 der wenigstens eine 3D-Druckstation 29 beförderbar ist, vorgesehen sein.

Die Anlage 53 umfasst weiterhin wenigstens eine Mischvorrichtung 58, mit welcher das wenigstens eine Wasser-Bindemittel-Gemisch 2 bereitstellbar ist.

Wie aus der Fig. 5 hervorgeht, ist wenigstens eine Zuführvorrichtung 59 vorgesehen, mit welcher das wenigstens eine von der wenigstens einen Mischvorrichtung 58 bereitgestellte wenigstens eine Wasser-Bindemittel-Gemisch 2 dem wenigstens einen Druckkopf 1 der wenigstens einen 3D-Druckstation 29 zuführbar ist.

Die Anlage 53 umfasst wenigstens eine Entpackungsstation 60, in welcher ein in der wenigstens einen 3D-Druckstation 29 auf der wenigstens einen Produktionspalette 32 gedrucktes Betonfertigbauelement 54 von einem nichtgebundenen partikelförmigen Zuschlagstoff 31 entpackbar ist.

Und schließlich umfasst die Anlage 53 bei dem konkret dargestellten Ausführungsbeispiel Stellplätze 55 für die wenigstens eine Produktionspalette 32.

Ein wesentlicher Vorteil der Anlage 53 besteht darin, dass auf Schalungen und das damit zusammenhängende Schalungsmanagement, wie z.B. einen Schalungsroboter, eine Reinigungsstation oder ein Magazin, verzichtet werden kann. Es sind auch kein Betonverteiler und keine Glättvorrichtung erforderlich, welche in konventionellen Umlaufanlagen zur Herstellung von Betonfertigelementen zum Einsatz kommen.

Mittels einer solchen Anlage 53 kann ein Verfahren zur Herstellung eines, vorzugsweise flächigen, Betonfertigbauelements 54 wie folgt durchgeführt werden:
In der wenigstens einen 3D-Druckstation 29 wird in einem ersten Druckverfahrensschritt mittels der wenigstens einen Schichtablagevorrichtung 30 wenigstens eine Schicht 34, 35, 36 des wenigstens einen partikelförmigen Zuschlagstoffs 31 auf der Produktionspalette 32 abgelegt und in einem zweiten Druckverfahrensschritt mittels des wenigstens einen Druckkopfs 1 eine vorbestimmte Dosis 49 des wenigstens einen Wasser-Bindemittel-Gemischs 2 an wenigstens einem örtlich vorbestimmten Bereich 33 der wenigstens einen Schicht 34, 35, 36 des wenigstens einen Zuschlagstoffs 31 abgegeben, vorzugsweise wobei die beiden Druckverfahrensschritte wiederholt und/oder in umgekehrter Reigenfolge durchgeführt werden.

Es kann dabei vorgesehen sein, dass wenigstens eine Außenseite des Betonfertigbauelements 54 im Zuge der Druckverfahrensschritte mit einer vorbestimmten Oberflächenstruktur versehen wird. Das stellt einen großen Vorteil gegenüber konventionellen Herstellungsverfahren dar, da auf formgebende teure Gummimatrizen verzichtet werden kann. Stattdessen wird die vorbestimmte Oberflächenstruktur, also z.B. ein gewünschtes Muster, gedruckt.

Der wenigstens eine partikelförmige Zuschlagstoff 31 wird aus der wenigstens einen Speichervorrichtung 56 mittels der wenigstens einen Fördervorrichtung 57 zur wenigstens einen Schichtablagevorrichtung 30 der wenigstens eine 3D-Druckstation 29 befördert.

Das wenigstens eine Wasser-Bindemittel-Gemisch 2 wird in der wenigstens einen Mischvorrichtung 58 bereitgestellt und mittels der wenigstens einen Zuführvorrichtung 59 dem wenigstens einen Druckkopf 1 der wenigstens einen 3D-Druckstation 29 zugeführt.

Die wenigstens eine Produktionspalette 32 wird mittels des wenigstens einen Transportsystems von der wenigstens einen 3D-Druckstation 29 zur wenigstens einen Entpackungsstation 60 transportiert, und ein in der wenigstens einen 3D-Druckstation 29 auf der wenigstens einen Produktionspalette 32 gedrucktes Betonfertigbauelement 54 wird in der wenigstens einen Entpackungsstation 60 von einem nichtgebundenen partikelförmigen Zuschlagstoff 31 entpackt.

Weist die Anlage 53 wie im dargestellten Fall Stellplätze 55 für die wenigstens eine Produktionspalette 32 auf, wird die wenigstens eine Produktionspalette 32 in einem weiteren Verfahrensschritt mittels des wenigstens einen Transportsystems von dem wenigstens einen Stellplatz 55 zur wenigstens einen 3D-Druckstation 29 transportiert.

Die Figur 2 zeigt ein erstes Ausführungsbeispiel einer 3D-Druckstation 29.

Die 3D-Druckstation 29 weist wenigstens zwei Führungsschienen 92 auf, an denen die wenigstens eine Schichtablagevorrichtung 30 und/oder der wenigstens eine Druckkopf 1 in einer Ebene parallel zur wenigstens einen Produktionspalette 32 bewegbar ist.

Die 3D-Druckstation 29 kann wenigstens eine Höhenverstellvorrichtung umfassen, mit welcher ein Abstand 93 der wenigstens einen Schichtablagevorrichtung 30 oder eines Teils der wenigstens einen Schichtablagerungsvorrichtung 30 und/oder des wenigstens einen Druckkopfs 1 von einer in der wenigstens einen 3D-Druckstation 29 angeordneten Produktionspalette 32 in vertikaler Richtung 37 in Abhängigkeit eines Druckfortschritts veränderbar ist.

Der wenigstens eine Druckkopf 1 und die wenigstens einen Schichtablagevorrichtung 30 weisen eine Längserstreckung in Richtung 41 auf und sind in eine Richtung 40 quer dazu entlang der Führungsschienen 92 bewegbar, was mittels eines Doppelpfeils angedeutet ist. Der wenigstens eine Druckkopf 1 oder Bestandteile desselben und/oder die wenigstens eine Schichtablagevorrichtung 30 oder Bestandteile derselben können auch in Richtung 41 bewegbar sein. Es können auch mehr als eine Schichtablagevorrichtung 30 und/oder mehr als ein Druckkopf 1 vorgesehen sein. Dadurch lässt sich die Druckgeschwindigkeit erhöhen.

Mittels der Schichtablagevorrichtung 30 können Schichten 34, 35 wenigstens eines partikelförmigen Zuschlagstoffs 31 auf der Produktionspalette 32 abgelegt werden. Mit Hilfe des Druckkopfs 1 kann eine vorbestimmte Dosis eines Bindemittels oder eines Wasser-Bindemittel-Gemischs 2, umfassend Wasser und wenigstens ein hydraulisches Bindemittel, insbesondere ein zementöses Bindemittel, an wenigstens einem örtlich vorbestimmten Bereich 33 der Produktionspalette 32 (für den Fall, dass noch keine Schicht des partikelförmigen Zuschlagstoffs 31 auf der Produktionspalette 32 abgelegt wurde) oder einer von der Schichtablagevorrichtung 30 auf der Produktionspalette 32 abgelegten Schicht 34, 35 des wenigstens einen Zuschlagstoffs 31 gesteuert abgegeben werden.

Die Schichtablagevorrichtung 30 kann wie im dargestellten Fall einen Ablagetrichter 66 als Zwischenspeicher für den wenigstens einen partikelförmigen Zuschlagstoff 31 aufweisen.

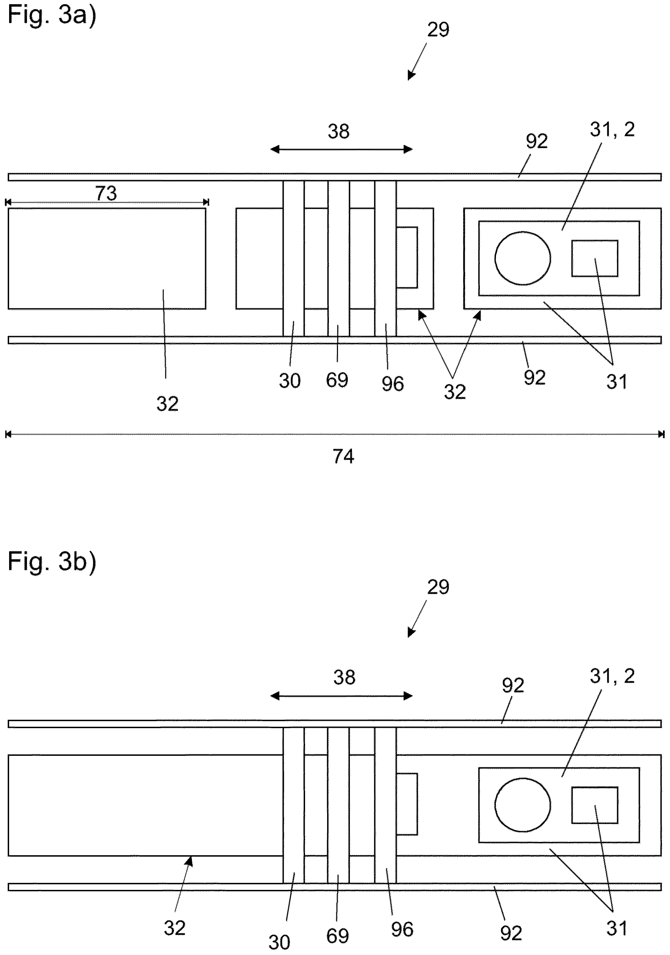

Die Figuren 3a) und 3b) zeigen zwei weitere Ausführungsbeispiele einer 3D-Druckstation 29 in einer schematisch dargestellten Draufsicht, wobei sich die beiden Ausführungsbeispiele dadurch unterscheiden, dass im Falle der Figur 3a) mehrere kürzere Produktionspaletten 32 zum Einsatz kommen, welche in Serie hintereinander in der Druckstation 29 anordenbar sind, und im Falle der Figur 3b) eine lange Produktionspalette 32 zum Einsatz kommt, auf welcher mehrere Fertigbauelemente druckbar sind. Die Druckrichtung 38 ist mit einem Pfeil markiert.

Die Anlage 53 umfasst also wenigstens eine Produktionspalette 32, welche eine Länge 73 aufweist und die wenigstens eine 3D-Druckstation 29 eine Länge 74 aufweist, besonders bevorzugt wobei die Länge 74 der wenigstens einen 3D-Druckstation 29 wenigstens doppelt so groß ist wie die Länge 73 der wenigstens einen Produktionspalette 32.

Im Vergleich zum Ausführungsbeispiel der Figur 2 umfasst die wenigstens eine 3D-Druckstation 29 wenigstens eine weitere Schichtablagevorrichtung 69 zur schichtweisen Ablage wenigstens eines Isoliermaterials 70, vorzugsweise wobei die Anlage 53 wenigstens eine weitere Speichervorrichtung 71, in welcher das wenigstens eine Isoliermaterial 70 gespeichert ist, und wenigstens eine weitere Fördervorrichtung 72, mit welcher das wenigstens eine in der wenigstens einen weiteren Speichervorrichtung 71 gespeicherte Isoliermaterial 70 zur wenigstens einen weiteren Schichtablagevorrichtung 30 der wenigstens eine 3D-Druckstation 29 beförderbar ist, umfasst (vergleiche auch die Figur 5). In diesem Zusammenhang bietet es sich an, dass die Anlage 53 auch wenigstens eine Saugvorrichtung zur Absaugung von nichtgebundenem partikelförmigem Zuschlagstoff 31 umfasst.

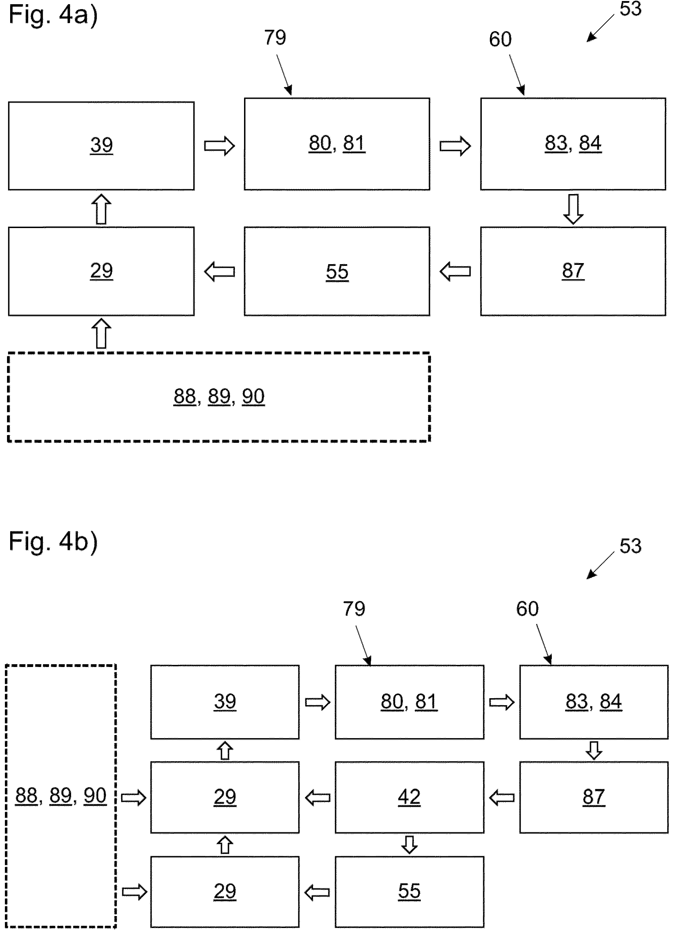

Die Figuren 4a) und 4b) zeigen zwei weitere Ausführungsbeispiele einer Anlage 53 zur Herstellung eines Betonfertigbauelements. Die Anlagen 53 sind als Umlaufanlagen konzipiert, in denen eine oder mehrere Produktionspaletten 32 die Stationen der Anlage 53 umlaufend mittels eines geeigneten Transportsystems durchlaufen.

Die Anlagen 53 weisen jeweils einen oder mehrere Stellplätze 55 auf. Diese können als Zwischenspeicher für leere Produktionspaletten 32 dienen. Von dort können die Produktionspaletten 32 zu einer oder mehreren 3D-Druckstationen 29 transportiert werden. Zur Verwaltung mehrerer Stellplätze 55 kann eine Zentralschiebebühne 42 vorgesehen sein.

Optional können wenigstens eine Richtmaschine 88, wenigstens eine Bewehrungsschweißvorrichtung 89 und/oder wenigstens eine Bewehrungsablagevorrichtung 90, mit welcher wenigstens eine Bewehrung 91 auf der wenigstens einen in der wenigstens einen 3D-Druckstation 29 angeordneten Produktionspalette 32 anordenbar ist, vorgesehen sein.

Die Anlagen 53 weisen jeweils wenigstens eine Trockenstation 79 auf, in welcher die wenigstens eine Produktionspalette 32 anordenbar ist, um ein in der wenigstens einen 3D-Druckstation 29 auf der wenigstens einen Produktionspalette 32 gedrucktes Betonfertigbauelement 54 auszuhärten, wobei die wenigstens eine Trockenstation 79 wenigstens eine Heizvorrichtung 80 und wenigstens eine Regalanlage 81 umfasst, um wenigstens zwei Produktionspaletten 32 übereinander in der wenigstens einen Trockenstation 79 anzuordnen. Die Trockenstation 79 ist in Produktionsrichtung nach der wenigstens einen 3D-Druckstation 29 angeordnet.

Zur Bedienung der Regalanlage 81 kann ein Regalbediengerät 39 vorgesehen sein.

Im Anschluss an die Trockenstation 79 können die Produktionspaletten 32 in eine Entpackungsstation 60 transportiert werden. Diese kann wenigstens eine Kippvorrichtung 83, und/oder wenigstens eine Abtransportvorrichtung 84 zum Abtransport des nichtgebundenen partikelförmigen Zuschlagstoffs 31 umfassen.

Und schließlich weisen die Anlagen 53 in den gezeigten Ausführungsbeispielen jeweils wenigstens eine Aufbereitungsstation 87 zur Aufbereitung der wenigstens einen Produktionspalette 32 auf, vorzugsweise wobei die wenigstens eine Aufbereitungsstation 87 wenigstens eine Reinigungsmittel- und/oder Trennmittel-Sprüheinrichtung umfasst.

Wie beim ersten Ausführungsbeispiel gemäß Figur 1 sind die Anlagen 53 schalungsroboterlos ausgebildet.

Die Figur 5 zeigt ein Schema eines weiteren Ausführungsbeispiels einer 3D-Druckstation 29 mit den dazugehörigen Versorgungskreisläufen.

Das vom wenigstens einen Druckkopf 1 in diesem Fall abgebbare Wasser-Bindemittel-Gemisch 2 umfasst Wasser und wenigstens ein zementöses Bindemittel. Die dazugehörige Anlage 53 umfasst wenigstens eine Zementspeichervorrichtung 61, in welcher Zement speicherbar ist, und/oder wenigstens eine Sackaufgabestation 62 für Zementsäcke, wobei die wenigstens eine Zementspeichervorrichtung 61 und/oder die wenigstens eine Sackaufgabestation 62 mit der wenigstens einen Mischvorrichtung 58, mit welcher das wenigstens eine Wasser-Bindemittel-Gemisch 2 bereitstellbar ist, in zementleitender Verbindung steht.

Über einen Fließmitteldosierer 99 kann wenigstens ein Fließmittel der Mischvorrichtung 58 dosiert zugeführt werden.

Im Anschluss an die Mischvorrichtung 58 kann ein Ausgleichsbehälter 98 angeordnet sein, aus dem einerseits das Wasser-Bindemittel-Gemisch 2 mittels einer Zuführvorrichtung 59, z.B. in Form einer Pumpe, über einen Filter 97 wenigstens einem Druckkopf 1 zuführbar ist. Andererseits kann nicht ausgebrachtes Wasser-Bindemittel-Gemisch 2 wieder vom Druckkopf 1 in den Ausgleichsbehälter 98 rückgeführt werden. Wichtig ist, dass das Wasser-Bindemittel-Gemisch 2 immer in Bewegung bleibt.

Die Schichtablagevorrichtung 30 der 3D-Druckstation 29 wird aus einer Speichervorrichtung 56 mittels einer Fördervorrichtung 57, z.B. in Form einer Pumpe, mit dem aufzutragenden partikelförmigen Zuschlagstoff 31 versorgt. Bei diesem Zuschlagstoff 31 kann es sich beispielsweise um Sand und/oder Blähton handeln.

Optional kann die 3D-Druckstation 29 eine weitere Schichtablagevorrichtung 69 z.B. zur Ausbringung eines Isoliermaterials 70 umfassen. Diese kann in analoger Weise über eine weitere Speichervorrichtung 71 und eine weitere Fördervorrichtung 72, z.B. eine Pumpe, versorgt werden.

Die Versorgungskreisläufe der beiden Schichtablagerungsvorrichtungen 30 und 69 können durch die wenigstens eine Entpackungsstation 60 geschlossen werden. Diese kann wenigstens eine Trennvorrichtung 86 zur Trennung des wenigstens einen partikelförmigen Zuschlagstoffs 31 von wenigstens einem weiteren mittels der wenigstens einen 3D-Druckstation 29 auf die wenigstens eine Produktionspalette 32 aufgetragenen Stoffes aufweisen, vorzugsweise wobei die wenigstens eine Trennvorrichtung 86 wenigstens ein Sieb und/oder wenigstens einen Windsichter umfasst.

Die derart voneinander getrennten Stoffe können dann jeweils mittels einer Rückführungsvorrichtung 44 oder 85 und jeweils ein Sieb 43 in die Speichervorrichtungen 56 und 71, bei denen es sich z.B. um ein Silo handeln kann, zurückgeführt werden. Die Rückführungsvorrichtungen 44 oder 85 können z.B. eine Pumpe, eine Absaugung und/oder ein Transportsystem umfassen.

Die Figur 6 zeigt ein Schema eines ersten Ausführungsbeispiels eines Druckbalkens 96. Der Druckbalken 96 umfasst mehrere, z.B. fünf, Druckköpfe 1, welche parallel über Leitungen 51 mit dem Wasser-Bindemittel-Gemisch 2 versorgt werden können.

Der Versorgungskreislauf umfasst einen Ausgleichsbehälter 98. In diesem kann ein Mischpropeller 100 angeordnet sein.

Mittels einer Zuführvorrichtung 59 kann das Wasser-Bindemittel-Gemisch 2 in einen Zwischentank 122 befördert werden. Dieser kann eine Spüldüse 104 aufweisen.

Weiterhin kann der Zwischentank 122 mit einem Schnellentlüftungsventil 103 gekoppelt sein, mit welchem der Zwischentank 122 in einem Notfall, z.B. einer Verstopfung, entlüftet werden kann. Das Bezugszeichen 101 bezeichnet den Düsendruck, das Bezugszeichen den Abfluss des Schnellentlüftungsventils 103.

Zur Druckregelung können ein Quetschventil 108, ein Druckregler 107 und ein Niveausensor 105 vorgesehen sein, welche mit einer Steuer- und/oder Regelungsvorrichtung 26 verbunden oder verbindbar sind.

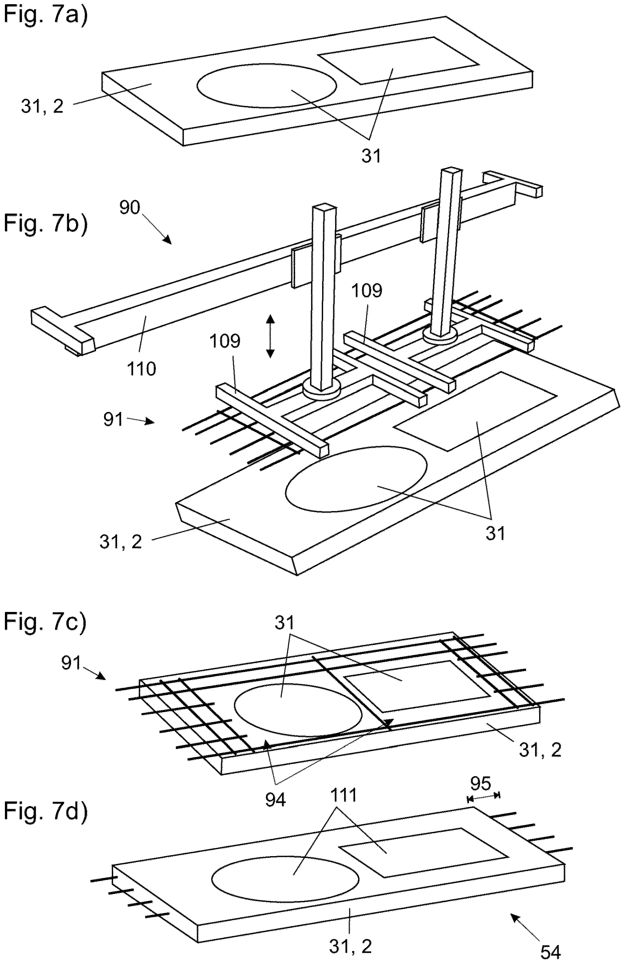

Die Figuren 7a) bis 7d) zeigen in vier Teilschritten ein erstes Ausführungsbeispiel eines Verfahrens zum Herstellen eines 3D-gedruckten Fertigteils, vorzugsweise Betonfertigbauelements 54, für die Bauindustrie.

Das Verfahren weist die folgenden Verfahrensschritte auf:
Es wird in einem ersten Verfahrensschritt wenigstens eine Schicht 34, 35, 36 wenigstens eines partikelförmigen Zuschlagstoffs 31 auf einer Produktionspalette 32 mittels wenigstens einer Schichtablagevorrichtung 30 abgelegt.

Es wird in einem zweiten Verfahrensschritt eine vorbestimmte Dosis 49 wenigstens eines Bindemittels oder wenigstens eines Wasser-Bindemittel-Gemischs 2 an wenigstens einem örtlich vorbestimmten Bereich 33 der wenigstens einen Schicht 34, 35, 36 des wenigstens einen Zuschlagstoffs 31 mittels wenigstens eines Druckkopfs 1 abgegeben.

Es wird in einem dritten Verfahrensschritt wenigstens eine Bewehrung 91 mittels wenigstens einer Bewehrungsablagevorrichtung 90 zumindest bereichsweise auf und/oder in zumindest dem wenigstens einen örtlich vorbestimmten Bereich 33, an welchem die vorbestimmte Dosis 49 des wenigstens einen Bindemittels oder des wenigstens einen Wasser-Bindemittel-Gemischs 2 im Zuge des zweiten Verfahrensschritts abgegeben wurde, angeordnet.

Im Zuge des dritten Verfahrensschritts kann wenigstens eine Bewehrung 91 in Form einer Bewehrungsmatte, vorzugsweise aus Stahl und/oder Kunststoff, oder in Form von Fasern, vorzugsweise Glasfasern, angeordnet werden.

Der erste und der zweite Verfahrensschritt können nach dem dritten Verfahrensschritt wenigstens einmal wiederholt werden, und/oder der erste und der zweite Verfahrensschritt können in umgekehrter Reihenfolge durchgeführt werden.

Die wenigstens eine Bewehrung 91 kann in wenigstens einem Bereich der wenigstens einen Schicht 34, 35, 36 des wenigstens einen Zuschlagstoffs 31, in welchem nicht das wenigstens eine Bindemittel oder das wenigstens eine Wasser-Bindemittel-Gemisch 2 abgegeben wurde, wenigstens eine Aussparung 94 aufweisen.

Die Bewehrung 91 kann im Zuge des dritten Verfahrensschrittes zumindest bereichsweise in den örtlich vorbestimmten Bereich 33 der wenigstens einen Schicht 34, 35, 36 des wenigstens eines partikelförmigen Zuschlagstoffs 31, in welchem die vorbestimmte Dosis 49 des wenigstens einen Bindemittels oder des wenigstens einen Wasser-Bindemittel-Gemischs 2 abgegeben wurde, versenkt werden, vorzugsweise durch Drücken und/oder Vibration.

Die Bewehrung 91 kann auch über mehrere Drucklagen im Zuge des dritten Verfahrensschrittes eingesenkt werden. Auch muss die Bewehrung 91 nicht vollständig versenkt werden.

Auch ein Überstand von der Oberseite, z.B. von 1-2 cm, ist möglich.

Die wenigstens eine Bewehrung 91 kann im Zuge des dritten Verfahrensschrittes derart angeordnet werden, dass die wenigstens eine Bewehrung 91 einen seitlichen Überstand 95 über eine Seite der wenigstens einen Schicht 34, 35, 36 des wenigstens eines partikelförmigen Zuschlagstoffs 31 aufweist. Solche Überstände, welche insbesondere dazu dienen, die Bauteile mit weiteren Bauteilen zu verbinden, können in konventionellen Anlagen, in denen Schalungen zum Einsatz kommen, nur mit einem enorm hohen Aufwand realisiert werden.

Nach dem Entpacken des hergestellten Fertigteils 54 von losem nicht gebundenem partikelförmigem Zuschlagstoff 31 verbleiben gedruckte, ohne Schalungen realisierte, Öffnungen 111, z.B. als Fensteraussparungen.

In der Figur 7b) ist schematisch eine Bewehrungsablagevorrichtung 90 dargestellt, mit welcher die wenigstens eine Bewehrung 91 zumindest bereichsweise auf und/oder in zumindest dem wenigstens einen örtlich vorbestimmten Bereich 33, an welchem die vorbestimmte Dosis 49 des wenigstens einen Bindemittels oder des wenigstens einen Wasser-Bindemittel-Gemischs 2 im Zuge des zweiten Verfahrensschritts abgegeben wurde, anordenbar ist. Die Bewehrungsablagevorrichtung 90 kann z.B. zwei Greifer 109 aufweisen, welche entlang eines Trägers 110 bewegbar gelagert sind.

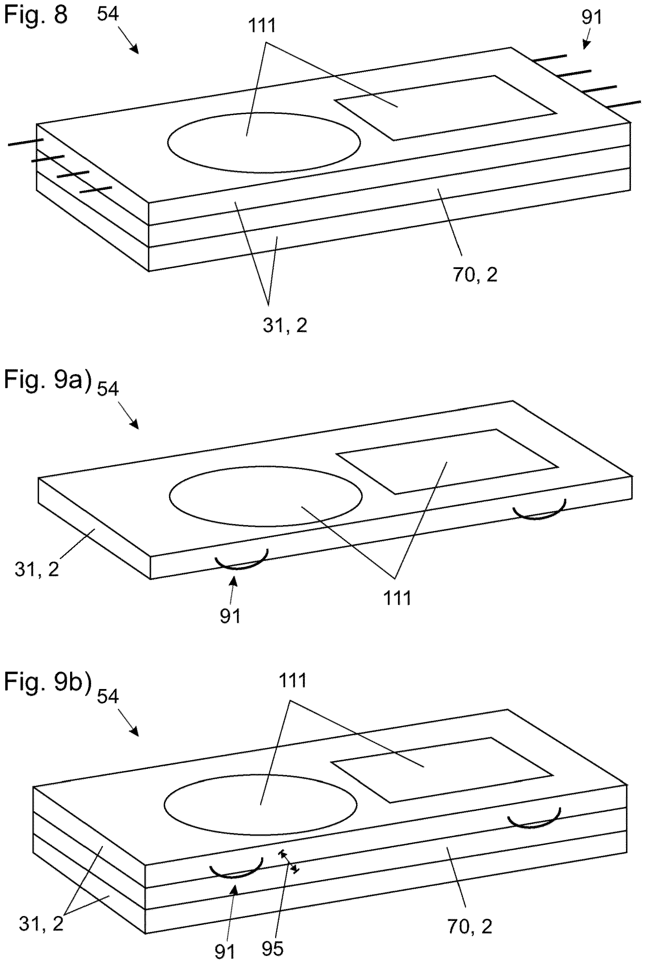

Die Figur 8 zeigt ein weiteres Ausführungsbeispiel eines gedruckten Betonfertigbauelements 54, welches neben einer oberen Schicht, welche dem in der Figur 7d) dargestellten Betonfertigbauelement 54 entspricht, eine untere Schicht ohne Bewehrung 91 und eine dazwischen angeordnete Schicht aus einem mitgedruckten Isoliermaterial 70 aufweist.

Die Figuren 9a und 9b zeigen weitere Ausführungsbeispiele eines gedruckten Betonfertigbauelements 54, bei denen Bewehrungen 91 in Form von Abhubankern eingebaut sind. Diese können wie dargestellt ausstehend oder versenkt in einer gedruckten Tasche angeordnet sein.

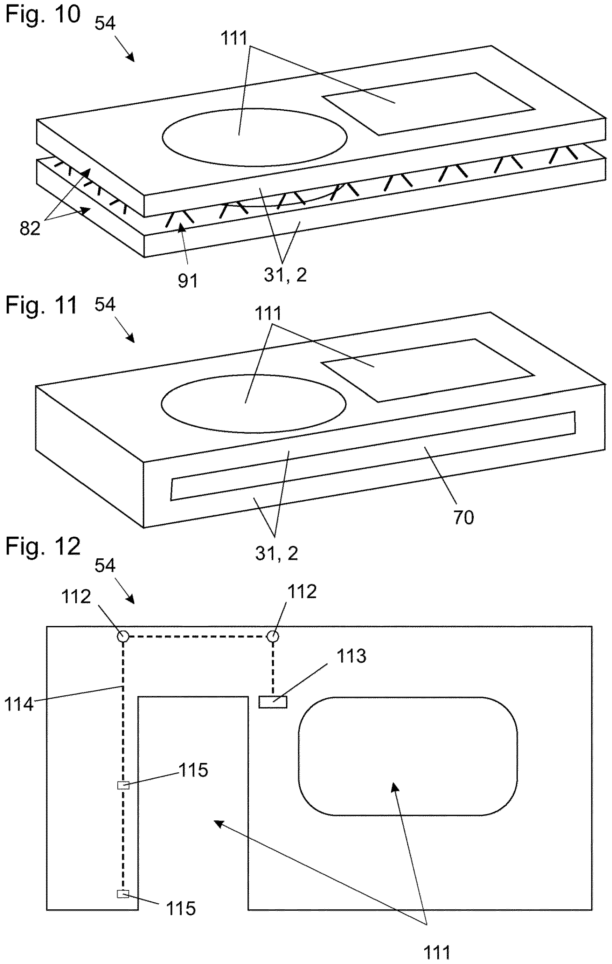

Die Figur 10 zeigt ein weiteres Ausführungsbeispiel eines gedruckten Betonfertigbauelements 54 in Form einer Doppelwand. Die Doppelwand weist zwei voneinander beabstandeten Seitenelementen 82 auf, die über wenigstens eine Bewehrung 91 miteinander verbunden sind.

Die beiden Seitenelemente 82 können dabei entweder gesondert auf zwei Produktionspaletten 32 gedruckt und dann zusammengefügt werden oder im Zuge eines einzigen Druckvorgangs auf einer Produktionspalette 32 gedruckt werden.

Die Figur 11 zeigt ein weiteres Ausführungsbeispiel eines gedruckten Betonfertigbauelements 54 mit einer Schicht aus Isoliermaterial 70. In diesem Fall handelt es sich um einen loses, d.h. nichtgebundenes Isoliermaterial.

Das Betonfertigbauelement 54 kann dadurch hergestellt werden, dass in einem weiteren Verfahrensschritt nichtgebundener partikelförmiger Zuschlagstoff 31 zumindest in einem Bereich entfernt, vorzugsweise abgesaugt, wird und in einem weiteren Verfahrensschritt mittels wenigstens einer weiteren Schichtablagevorrichtung 30 wenigstens ein Isoliermaterial 70 in jenem Bereich abgelegt wird, in dem der nichtgebundene partikelförmige Zuschlagstoff 31 entfernt wurde.

Die Seiten des Betonfertigbauelements 54 können durch gedruckte Seitenwände oder andere Maßnahmen verschlossen werden, damit das lose Isoliermaterial 70 nicht aus dem Betonfertigbauelement 54 herausrinnen kann.

Die Figur 12 zeigt ein weiteres Ausführungsbeispiel eines gedruckten Betonfertigbauelements 54 mit gedruckten Aussparung 112 für Unterputzdosen, Aussparung 113 für eine Rollosteuerung, Aussparungen 114 für Unterputz-Elektroleitungen und Aussparungen 115 für Schalter.

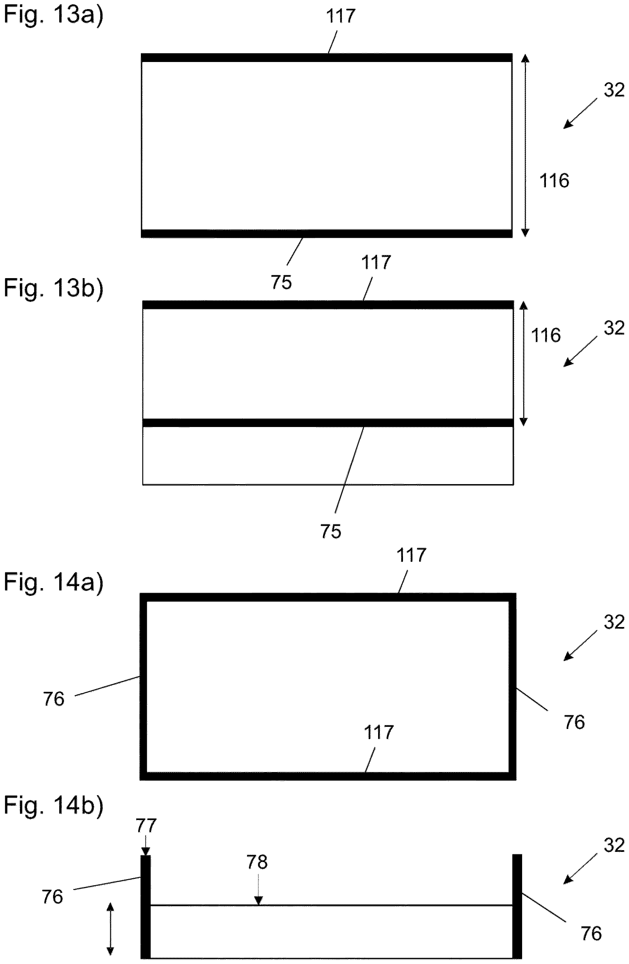

Die Figuren 13a und 13b zeigen ein erstes Ausführungsbeispiel einer Produktionspalette 32, welche eine feste Seitenbegrenzung 117 und eine, z.B. manuell, Seitenbegrenzung 75 umfasst. Auf diese Weise kann eine Breite 116 des bedruckbaren Bereichs verändert werden. Das kann beispielsweise dann sinnvoll sein, wenn ein kleineres Fertigbauteil gedruckt werden soll.

Die Figuren 14a und 14b zeigen ein weiteres Ausführungsbeispiel einer Produktionspalette 32, wobei die Produktionspalette 32 zwei höhenverstellbare Seitenbegrenzungen 76 umfasst, wobei die höhenverstellbaren Seitenbegrenzungen 76 jeweils in eine erste Stellung an der Produktionspalette 32 bringbar sind, in welcher die Seitenbegrenzungen 76 ein auf der Produktionspalette 32 bedruckbares Volumen seitlich begrenzen, und in zumindest eine zweite Stellung, in welcher eine Oberseite 77 der Seitenbegrenzungen 76 im Wesentlichen mit einer Oberseite 78 der Produktionspalette 32 fluchtet.

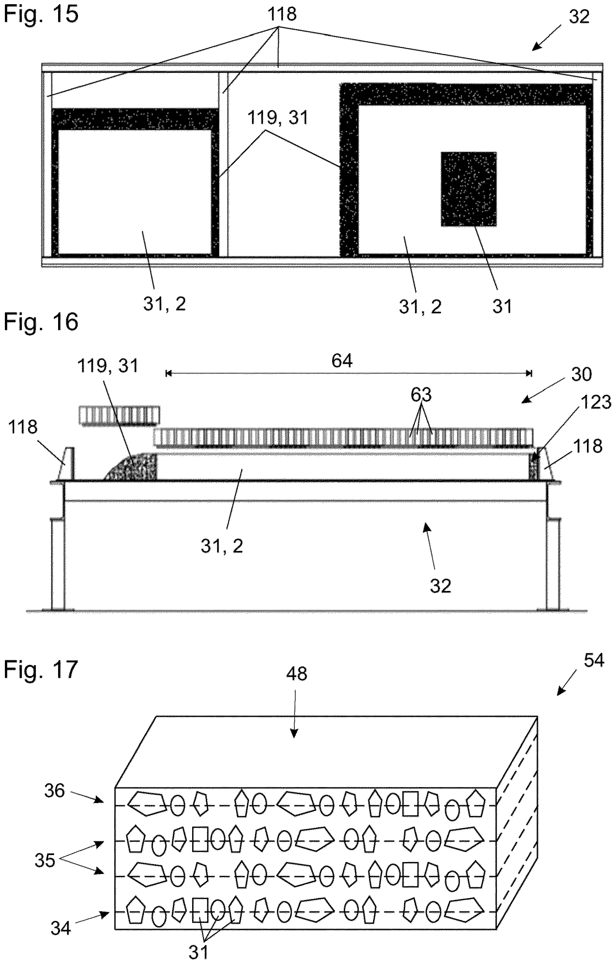

Die Figur 15 zeigt ein weiteres Ausführungsbeispiel einer Produktionspalette 32 mit zwei bedruckten Bereichen. Es sind Begrenzungen 118 vorhanden, welche fest, verschiebbar oder höhenverstellbar ausgebildet sein können.

Eine seitliche Begrenzung eines gedrückten Fertigbauelements muss aber nicht zwingend durch Begrenzungen in Form von separaten Begrenzungselementen erfolgen. Eine seitliche Begrenzung kann auch im Zuge eines Druckprozesses in Form von Schüttkegeln 119 aus dem wenigstens einen partikelförmigen Zuschlagstoff 31 gebildet werden.

Die Figur 16 zeigt ein weiteres Ausführungsbeispiel einer Produktionspalette 32 und einer Schichtablagevorrichtung 30 in einer schematisch dargestellten Querschnittsansicht von der Seite.

Um eine möglichst glatte Seitenfläche 123 eines zu druckenden Fertigbauteils zu erzeugen, kann ein Düsenabstand eines Druckkopfes 1 zu einer seitlichen Begrenzung möglichst klein gewählt werden. Im Idealfall kann auf diese Weise eine quasi schalungsglatte Seitenfläche 123 erzeugt werden.

Es bietet sich an, dass die Schichtablagevorrichtung 30 wie im dargestellten Fall mehrere Segmente 63 aufweist, die einzeln aktivierbar und deaktivierbar sind, um eine vorbestimmte, d.h. variabel einstellbare, Schichtablagebreite 64 zu erzielen. In diesem Zusammenhang bietet es sich an, dass die Schichtablagevorrichtung 30 innere und/oder äußere Schotten aufweist.

In einer analogen Weise kann es vorgesehen sein, dass der Druckbalken mehrteilig ausgebildet ist und einzeln aktivierbar und deaktivierbar Druckköpfe 1 aufweist, um eine vorbestimmte Druckbreite zu erzielen.

Die Figur 17 zeigt ein weiteres Ausführungsbeispiel eines Betonfertigbauelements 54, hergestellt nach einem vorbeschriebenen Verfahren. Dabei werden Schichten 34, 35, 36 des wenigstens einen partikelförmigen Zuschlagstoffs 31 auf der Produktionspalette 32 mittels der wenigstens einen Schichtablagevorrichtung 30 abgelegt. Die Schichten 34, 35, 36 sind durch gestrichelte Linien angedeutet. Es wird eine vorbestimmte Dosis 49 des Wasser-Bindemittel-Gemischs 2 an örtlich vorbestimmten Bereichen 33 der Schichten 34, 35, 36 des wenigstens einen Zuschlagstoffs 31 mittels des Druckkopfs 1 abgegeben.

Beim dargestellten Betonfertigbauelement 54 wurden vor der Ablage einer ersten Schicht 34 des wenigstens einen Zuschlagstoffs 31 auf der Produktionspalette 32 eine vorbestimmte Dosis 49 des wenigstens einen Wasser-Bindemittel-Gemischs 2 an wenigstens einem örtlich vorbestimmten Bereich 33 der Druckplattform 32 abgegeben wird, und nach der Ablage einer letzten Schicht 36 des wenigstens einen Zuschlagstoffs 31 eine vorbestimmte Dosis 49 des Wasser-Bindemittel-Gemischs 2 an wenigstens einem örtlich vorbestimmten Bereich 33 der letzten Schicht 36 des wenigstens einen Zuschlagstoffs 31 abgegeben. Auf diese Weise sind an der Ober- und Unterseite des Betonfertigbauelements 54 sehr glatte Oberflächen 48 erzeugbar, welche ähnlich glatt sind, wie die mittels Schalungen in konventioneller Weise erzeugbaren Oberflächen.

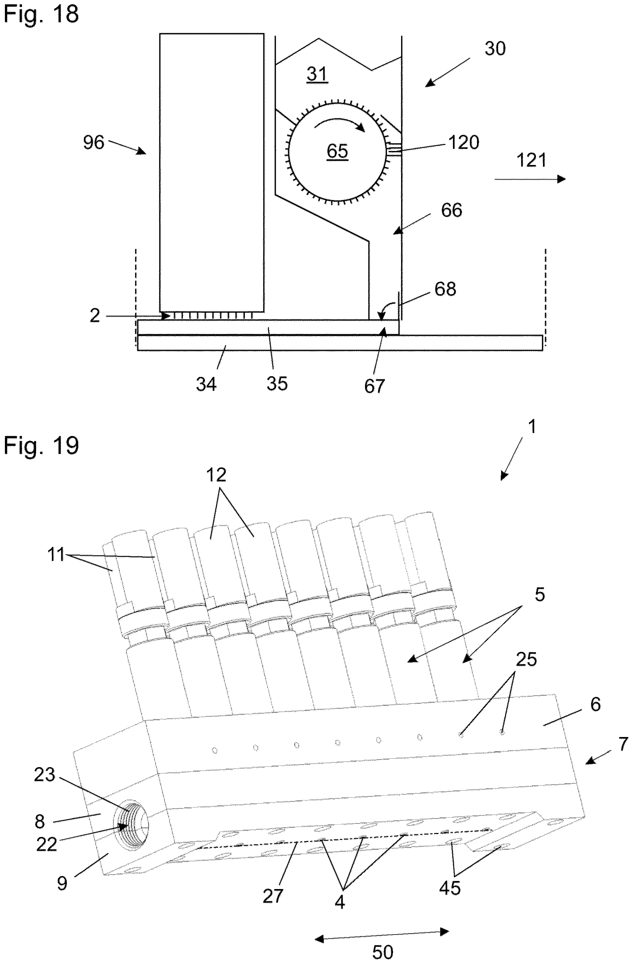

Die Figur 18 zeigt ein Ausführungsbeispiel eines Druckbalkens 30 und einer Schichtablagevorrichtung 30 einer 3D-Druckstation in einer schematisch dargestellten Querschnittsansicht von der Seite.

Die Schichtablagevorrichtung 30 umfasst eine Dosierwalze 65, über welche der wenigstens eine partikelförmige Zuschlagstoff 31 auf der wenigstens einen Produktionspalette 32 auftragbar ist.

Es ist eine Entnahmevorrichtung 120, z.B. in Form einer Bürste, vorgesehen, mit welcher der wenigstens eine partikelförmige Zuschlagstoff 31 dosiert der Dosierwalze 65 entnehmbar ist.

Die Dosierwalze 65 kann auch mehrteilig ausgebildet sein.

Es ist ein Ablagetrichter 66 vorgesehen, welcher mit wenigstens einer Vibrationsvorrichtung in Vibration versetzbar ist, sodass ein Verkanten von großkörnigem Material verhinderbar ist.

Die Schichtablagevorrichtung 30 umfasst wenigstens eine Abgabeöffnung 67 und wenigstens eine Dosierklappe 68 , mit welcher die wenigstens eine Abgabeöffnung 67 unterschiedlich weit verschließbar ist, sodass eine Ausgabemenge des wenigstens einen partikelförmigen Zuschlagstoffs 31 dosierbar ist.

Die Bewegungsrichtung des Druckbalkens 30 und der Schichtablagevorrichtung 30 ist mit dem Bezugszeichen 121 kenntlich gemacht.

Der Druckballen 30 und die Schichtablagevorrichtung 30 oder zumindest ein Teil der Schichtablagevorrichtung 30 sind einzeln und unabhängig voneinander heb- und senkbar.

Die Figur 19 sowie die nachfolgenden Figuren zeigen ein schematisch dargestelltes Ausführungsbeispiel eines Druckkopfes 1 zur gesteuerten Abgabe eines Wasser-Bindemittel-Gemischs 2, umfassend Wasser und wenigstens ein hydraulisches Bindemittel, insbesondere ein zementöses Bindemittel, wobei der Druckkopf 1 einen Zuführkanal 3 zur Zufuhr des Wasser-Bindemittel-Gemischs 2, mehrere Auslassöffnungen 4, welche in Fluidverbindung mit dem Zuführkanal 3 bringbar sind, und mehrere Ventile 5, mit welchen die Auslassöffnungen 4 gesteuert öffenbar und verschließbar ist, wodurch eine vorbestimmte Dosis 49 des Wasser-Bindemitte-Gemischs 2 durch die Auslassöffnungen 4 abgebbar ist, umfasst.

Die Auslassöffnungen 4 sind äquidistant auf einer Linie 27 angeordnet.

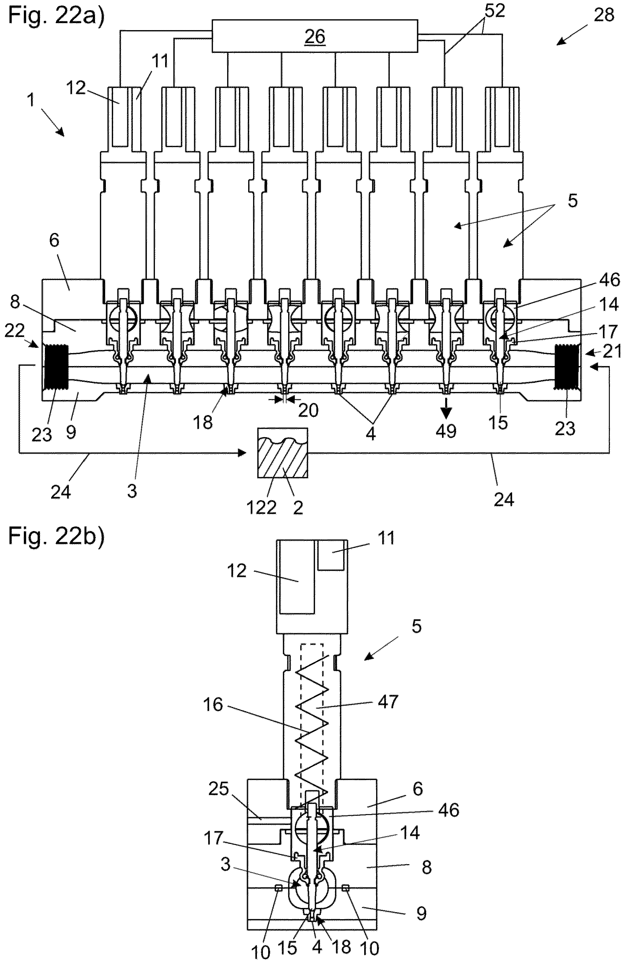

Die Ventile 5 sind als elektropneumatische Ventile ausgebildet und weisen jeweils einen Druckluftanschluss 11 und einen Elektrikanschluss 12 auf. Über den Druckluftanschluss 11 kann das Ventil 5 mit Druckluft versorgt werden, mit der in weiterer Folge ein Zylinder 47, welcher mit einer Ventilstange 14 bewegungsgekoppelt verbunden ist, betätigbar ist vergleiche auch Figur 22b.

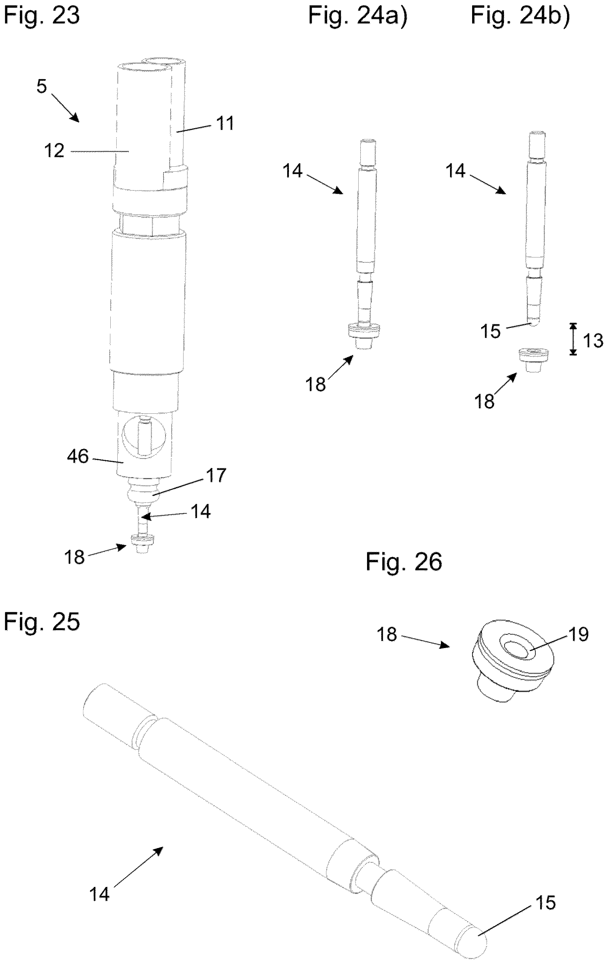

Die Ventile 5 weisen jeweils eine, vorzugsweise über einen Verstellweg 13 zwischen 0,5 und 1,5 mm, verstellbare Ventilstange 14, vorzugsweise aus wenigstens einem Hartmetall, auf. Der Verstellweg 13 ist in der Figur 24b dargestellt.

Die Ventilstangen 14 können wie im dargestellten Fall ein freies Ende 15 aufweisen, welches kugelkopfförmig ausgebildet ist.

Die Ventile 5 können wenigstens eine Rückstellfeder 16 umfassen, bevorzugt wobei die wenigstens eine Rückstellfeder 16 derart ausgebildet ist, dass die zugeordnete Auslassöffnung 4 mit einer Schließkraft zwischen 10 und 50 N, besonders bevorzugt mit einer Schließkraft zwischen 20 und 40 N, verschließbar ist. In der Figur 22b ist eine solche Rückstellfeder schematisch dargestellt.

Die Ventile 5 können ein Lager 46 für die Ventilstange 14 aufweisen, wobei das Lager 46 wie im dargestellten Fall hülsenförmig ausgebildet sein kann. Das Lager 46 umgibt die Ventilstange 14 und die Ventilstange 14 bewegt sich relativ zum Lager 46.

Pro Ventil 5 ist eine, vorzugsweise austauschbare, Dichtmembran 17 vorgesehen, welche die Ventilstange 14 gegen ein Eindringen des Wasser-Bindemittel-Gemischs 2 abdichtet. Im konkreten Fall ist die Dichtmembran dichtend zwischen der Ventilstange 14 und dem Lager 46 angeordnet.

Der Druckkopf 1 weist mehrere Entlüftungskanäle 25 auf, mit welchen ein Druckausgleich für die Ventilstangen 14 erzeugbar ist vergleiche auch Figur 22b. Ohne die Entlüftungskanäle 25 besteht die Gefahr, dass sich auf der dem Ventil 5 zugewandten Seite der Dichtmembran 17 ein Unterdruck entsteht, durch welchen ein Teil des Wasser-Bindemittel-Gemischs 2 angesaugt wird und dadurch in das Ventil 5 eindringt.

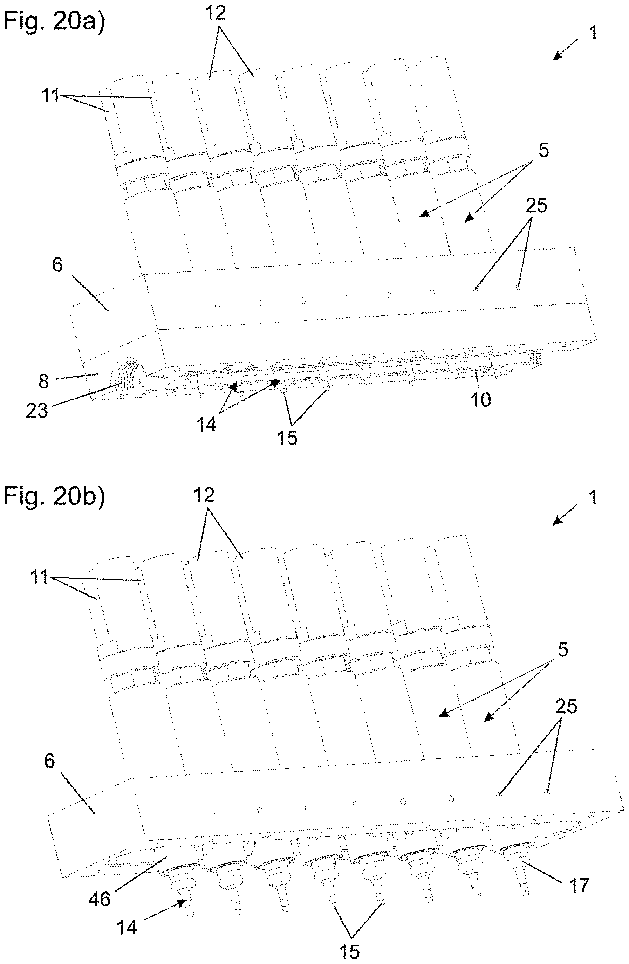

Anhand der Figuren 20a und 20b ist besonders gut erkennbar, dass der Druckkopf 1 einen Grundkörper 6, an welchem die Ventile 5 angeordnet sind, und einen mit dem Grundkörper 6 lösbar verbindbaren Wechselkörper 7 aufweist, wobei am Wechselkörper 7 die Auslassöffnungen 4 und der Zuführkanal 3 angeordnet sind. Zur lösbaren Verbindung des Wechselkörpers 7 am Grundkörper 6 können Befestigungsmittel 45 vorgesehen sein (vergleiche Figur 19), welche wie im dargestellten Fall als Schrauben ausgebildet sein können, die in Gewinde, welche im Grundkörper 6 ausgebildet sind, eingreifen.

Der Wechselkörper 7 besteht aus wenigstens einem säurebeständigen Kunststoff, vorzugsweise ausgewählt aus einer Gruppe bestehend aus PE, PVC, POM, PTFE und Mischungen davon und umfasst wenigstens ein Spritzgussteil.

Der Wechselkörper 7 weist zwei lösbar miteinander verbindbare Teilkörper 8, 9 auf, vorzugsweise wobei zwischen den zwei Teilkörpern 8, 9 eine Dichtung 10 angeordnet ist (vergleiche die Figuren 20a und 22b).

Die Figur 22a zeigt ein schematisch dargestelltes Ausführungsbeispiel einer Anordnung 28 mit einem Wasser-Bindemittel-Gemisch 2, umfassend Wasser und wenigstens ein hydraulisches Bindemittel, insbesondere ein zementöses Bindemittel, und einem Druckkopf 1 zur gesteuerten Abgabe des Wasser-Bindemittel-Gemischs in einer Querschnittsansicht entlang einer Querschnittsebene parallel zu einer Längsachse 50 des Druckkopfes 1. Die Längsachse 50 ist exemplarisch in der Figur 2 eingezeichnet.

Der Druckkopf 1 ist gemäß dem zuvor beschriebenen bevorzugten Ausführungsbeispiel ausgebildet.

Das wenigstens eine hydraulische Bindemittel ist ausgewählt aus einer Gruppe bestehend aus Portlandzement, Calciumaluminatzement, Calciumsulfoaluminatzement und Mischungen davon.

Das Wasser-Bindemittel-Gemisch 2 umfasst einen Zusatzstoff in Form eines Fließmittels.

Der Zuführkanal 3 weist eine Eingangsöffnung 21 für das Wasser-Bindemittel-Gemisch 2 auf, wobei der Zuführkanal 3 eine der Eingangsöffnung 21 gegenüber liegende Ausgangsöffnung 22 aufweist. Die Eingangsöffnung 21 und die Ausgangsöffnung 22 weisen jeweils ein Gewinde 23 zum Anschluss einer Fluidleitung 24 auf.

Das Wasser-Bindemittel-Gemisch 2 kann in einem Zwischentank 122 angeordnet sein. Die Fluidleitungen 24 verbinden den Zwischentank 122 mit dem Zuführkanal 3 des Druckkopfes 1.

Es ist eine Steuer- und/oder Regelungsvorrichtung 26 vorgesehen, mit welcher die Ventile 5 des Druckkopfes 1 steuerbar sind. Die Steuer- und/oder Regelungsvorrichtung 26 sind jeweils über Leitungen 52 mit dem Elektrikanschluss 12 der Ventile 5 verbunden.

Mittels der Anordnung 28 kann ein Verfahren zur gesteuerten Abgabe eines Wasser-Bindemittel-Gemischs 2, umfassend Wasser und wenigstens ein hydraulisches Bindemittel, insbesondere ein zementöses Bindemittel, durchgeführt werden, wobei das Verfahren die folgenden Verfahrensschritte umfasst: das Wasser-Bindemittel-Gemisch 2 wird über den Zuführkanal 3 des Druckkopfs 1 den Auslassöffnungen 4 Druckkopfs 1 zugeführt, vorzugsweise mit einem Druck zwischen 0,1 und 2,0 bar, und die Auslassöffnungen 4 werden mittels der Ventile 5 des Druckkopfs 1 gesteuert geöffnet und verschlossen und es wird dadurch eine vorbestimmte Dosis 49 des Wasser-Bindemitte-Gemischs 2 durch die Auslassöffnungen 4 abgegeben.

Die Figuren 23, 24a, 24b, 25 und 26 zeigen Details eines Ausführungsbeispiel eines Ventils 5 des Druckkopfes 1 zur gesteuerten Abgabe eines Wasser-Bindemittel-Gemischs 2 sowie eines mit der Ventilstange 14 des Ventils 5 zusammenwirkenden eines Düsenkörpers 18, in welchem die Auslassöffnung 4 ausgebildet ist. Der Durchmesser 20 vergleiche Figur 22a der Auslassöffnung 4 beträgt zwischen 0,5 und 2,0 mm.

Der Düsenkörper 18 ist aus wenigstens einem Hartmetall oder Keramik gebildet, und weist eine schräge Anpressfläche 19 für ein freies Ende 15 der Ventilstange 14 des Ventils 5 auf. Die schräge Anpressfläche 19 kann wie im dargestellten Fall trichterförmig ausgebildet sein.

## Patentansprüche

1. Anlage (53) zur Herstellung eines, vorzugsweise flächigen, Betonfertigbauelements (54), umfassend mehrere Stationen, die von wenigstens einer Produktionspalette (32), insbesondere umlaufend, durchlaufen werden kann, wobei die Anlage (53) wenigstens ein Transportsystem, mit welchem die wenigstens eine Produktionspalette (32) durch die Anlage (53) transportierbar ist, umfasst, wobei die Anlage (53) weiterhin umfasst
- wenigstens eine 3D-Druckstation (29) mit wenigstens einer Schichtablagevorrichtung (30) zur schichtweisen Ablage wenigstens eines partikelförmigen Zuschlagstoffs (31) auf der wenigstens einen Produktionspalette (32) und wenigstens einem Druckkopf (1) zur gesteuerten Abgabe wenigstens eines Wasser-Bindemittel-Gemischs (2), umfassend Wasser und wenigstens ein hydraulisches Bindemittel, insbesondere ein zementöses Bindemittel, an wenigstens einem örtlich vorbestimmten Bereich (33) der Produktionspalette (32) und/oder einer von der wenigstens einen Schichtablagevorrichtung (30) auf der Produktionspalette (32) abgelegten Schicht (34, 35, 36) des wenigstens einen Zuschlagstoffs (31),
- wenigstens eine Speichervorrichtung (56), in welcher der wenigstens eine partikelförmige Zuschlagstoff (31) gespeichert ist,
- wenigstens eine Fördervorrichtung (57), mit welcher der wenigstens eine in der wenigstens einen Speichervorrichtung (56) gespeicherte partikelförmige Zuschlagstoff (31) zur wenigstens einen Schichtablagevorrichtung (30) der wenigstens eine 3D-Druckstation (29) beförderbar ist, und
- wenigstens eine Entpackungsstation (60), in welcher ein in der wenigstens einen 3D-Druckstation (29) auf der wenigstens einen Produktionspalette (32) gedrucktes Betonfertigbauelement (54) von einem nichtgebundenen partikelförmigen Zuschlagstoff (31) entpackbar ist, **dadurch gekennzeichnet, dass** die Anlage weiterhin umfasst:
- das wenigstens eine Wasser-Bindemittel-Gemisch (2), wobei das wenigstens eine Wasser-Bindemittel-Gemisch (2) Wasser und wenigstens ein hydraulisches Bindemittel, insbesondere ein zementöses Bindemittel, aufweist,
- wenigstens eine Mischvorrichtung (58), mit welcher das wenigstens eine Wasser-Bindemittel-Gemisch (2) bereitstellbar ist,
- wenigstens eine Zuführvorrichtung (59), mit welcher das wenigstens eine von der wenigstens einen Mischvorrichtung (58) bereitgestellte wenigstens eine Wasser-Bindemittel-Gemisch (2) dem wenigstens einen Druckkopf (1) der wenigstens einen 3D-Druckstation (29) zuführbar ist.

2. Anlage (53) nach Anspruch 1, wobei das vom wenigstens einen Druckkopf (1) abgebbare Wasser-Bindemittel-Gemisch (2) Wasser und wenigstens ein zementöses Bindemittel umfasst, und wobei die Anlage (53) wenigstens eine Zementspeichervorrichtung (61), in welcher Zement speicherbar ist, und/oder wenigstens eine Sackaufgabestation (62) für Zementsäcke umfasst, wobei die wenigstens eine Zementspeichervorrichtung (61) und/oder die wenigstens eine Sackaufgabestation (62) mit der wenigstens einen Mischvorrichtung (58), mit welcher das wenigstens eine Wasser-Bindemittel-Gemisch (2) bereitstellbar ist, in zementleitender Verbindung steht.

3. Anlage (53) nach Anspruch 1 oder 2, wobei die wenigstens eine Schichtablagevorrichtung (30) der wenigstens einen 3D-Druckstation (29)
- mehrere Segmente (63) aufweist, die einzeln aktivierbar und deaktivierbar sind, um eine vorbestimmte Schichtablagebreite (64) zu erzielen, und/oder
- wenigstens eine Dosierwalze (65) umfasst, über welche der wenigstens eine partikelförmige Zuschlagstoff (31) auf der wenigstens einen Produktionspalette (32) auftragbar ist, und/oder
- wenigstens einen Ablagetrichter (66) umfasst, vorzugsweise wobei wenigstens eine Vibrationsvorrichtung vorgesehen ist, mit welcher der wenigstens eine Ablagetrichter (66) in Vibration versetzbar ist, sodass ein Verkanten von großkörnigem Material verhinderbar ist, und/oder
- wenigstens eine Abgabeöffnung (67) und wenigstens eine Dosierklappe (68) aufweist, mit welcher die wenigstens eine Abgabeöffnung (67) unterschiedlich weit verschließbar ist, sodass eine Ausgabemenge des wenigstens einen partikelförmigen Zuschlagstoffs (31) dosierbar ist.

4. Anlage (53) nach einem der Ansprüche 1 bis 3, wobei die wenigstens eine 3D-Druckstation (29)
- wenigstens eine weitere Schichtablagevorrichtung (69) zur schichtweisen Ablage wenigstens eines Isoliermaterials (70) umfasst, vorzugsweise wobei die Anlage (53) wenigstens eine weitere Speichervorrichtung (71), in welcher das wenigstens eine Isoliermaterial (70) gespeichert ist, und wenigstens eine weitere Fördervorrichtung (72), mit welcher das wenigstens eine in der wenigstens einen weiteren Speichervorrichtung (71) gespeicherte Isoliermaterial (70) zur wenigstens einen weiteren Schichtablagevorrichtung (30) der wenigstens eine 3D-Druckstation (29) beförderbar ist, umfasst, und/oder
- wenigstens eine Saugvorrichtung zur Absaugung von nichtgebundenem partikelförmigem Zuschlagstoff (31) umfasst.

5. Anlage (53) nach einem der Ansprüche 1 bis 4, wobei die Anlage (53) wenigstens eine Produktionspalette (32) umfasst, vorzugsweise wobei die wenigstens eine Produktionspalette (32)
- eine Länge (73) aufweist und die wenigstens eine 3D-Druckstation (29) eine Länge (74) aufweist, besonders bevorzugt wobei die Länge (74) der wenigstens einen 3D-Druckstation (29) wenigstens doppelt so groß ist wie die Länge (73) der wenigstens einen Produktionspalette (32), und/oder
- wenigstens eine auf der wenigstens einen Produktionspalette (32) verschiebbare Seitenbegrenzung (75) umfasst, und/oder
- wenigstens eine höhenverstellbare Seitenbegrenzung (76) umfasst, vorzugsweise wobei die wenigstens eine höhenverstellbare Seitenbegrenzung (76) in eine erste Stellung an der wenigstens einen Produktionspalette (32) bringbar ist, in welcher die wenigstens eine Seitenbegrenzung (76) ein auf der wenigstens einen Produktionspalette (32) bedruckbares Volumen seitlich begrenzt, und in zumindest eine zweite Stellung, in welcher eine Oberseite (77) der wenigstens einen Seitenbegrenzung (76) im Wesentlichen mit einer Oberseite (78) der wenigstens einen Produktionspalette (32) fluchtet.

6. Anlage (53) nach einem der Ansprüche 1 bis 5, wobei die Anlage (53) wenigstens eine Trockenstation (79), in welcher die wenigstens eine Produktionspalette (32) anordenbar ist, um ein in der wenigstens einen 3D-Druckstation (29) auf der wenigstens einen Produktionspalette (32) gedrucktes Betonfertigbauelement (54) auszuhärten, vorzugsweise wobei die wenigstens eine Trockenstation (79)
- wenigstens eine Heizvorrichtung (80) umfasst, und/oder
- wenigstens eine Regalanlage (81) umfasst, um wenigstens zwei Produktionspaletten (32) übereinander in der wenigstens einen Trockenstation (79) anzuordnen, und/oder
- in Produktionsrichtung nach der wenigstens einen 3D-Druckstation (29) angeordnet ist.

7. Anlage (53) nach einem der Ansprüche 1 bis 6, wobei die wenigstens eine Entpackungsstation (60) umfasst
- wenigstens eine Kippvorrichtung (83), und/oder
- wenigstens eine Abtransportvorrichtung (84) zum Abtransport des nichtgebundenen partikelförmigen Zuschlagstoffs (31), und/oder
- wenigstens eine Rückführungsvorrichtung (85), mit welcher der nichtgebundene partikelförmige Zuschlagstoff (31) in die wenigstens eine Speichervorrichtung (56) rückführbar ist, und/oder
- wenigstens eine Trennvorrichtung (86) zur Trennung des wenigstens einen partikelförmigen Zuschlagstoffs (31) von wenigstens einem weiteren mittels der wenigstens einen 3D-Druckstation (29) auf die wenigstens eine Produktionspalette (32) aufgetragenen Stoffes, vorzugsweise wobei die wenigstens eine Trennvorrichtung (86) wenigstens ein Sieb und/oder wenigstens einen Windsichter aufweist.

8. Anlage (53) nach einem der Ansprüche 1 bis 7, wobei die Anlage (53)
- wenigstens eine Aufbereitungsstation (87) zur Aufbereitung der wenigstens einen Produktionspalette (32) umfasst, vorzugsweise wobei die wenigstens eine Aufbereitungsstation (87) wenigstens eine Reinigungsmittel- und/oder Trennmittel-Sprüheinrichtung aufweist, und/oder
- schalungsroboterlos ausgebildet ist, und/oder
- wenigstens einen Stellplatz (55) für die wenigstens eine Produktionspalette (32) umfasst und/oder
- wenigstens eine Richtmaschine (88), wenigstens eine Bewehrungsschweißvorrichtung (89) und/oder wenigstens eine Bewehrungsablagevorrichtung (90), mit welcher wenigstens eine Bewehrung (91) auf der wenigstens einen in der wenigstens einen 3D-Druckstation (29) angeordneten Produktionspalette (32) anordenbar ist, umfasst.

9. Anlage (53) nach einem der Ansprüche 1 bis 8, wobei die wenigstens eine 3D-Druckstation (29)
- wenigstens zwei Führungsschienen (92) aufweist, an denen die wenigstens eine Schichtablagevorrichtung (30) und/oder der wenigstens eine Druckkopf (1) in einer Ebene parallel zur wenigstens einen Produktionspalette (32) bewegbar ist, und/oder
- wenigstens eine Höhenverstellvorrichtung umfasst, mit welcher ein Abstand (93) der wenigstens einen Schichtablagevorrichtung (30) oder eines Teils der wenigstens einen Schichtablagerungsvorrichtung (30) und/oder des wenigstens einen Druckkopfs (1) von einer in der wenigstens einen 3D-Druckstation (29) angeordneten Produktionspalette (32) in vertikaler Richtung (37) in Abhängigkeit eines Druckfortschritts veränderbar ist.

10. Anlage (53) nach einem der Ansprüche 1 bis 9, wobei der wenigstens eine Druckkopf (1) der wenigstens einen 3D-Druckstation (29) wenigstens einen Zuführkanal (3) zur Zufuhr des Wasser-Bindemittel-Gemischs (2), wenigstens eine Auslassöffnung (4), welche in Fluidverbindung mit dem wenigstens einen Zuführkanal (3) bringbar ist, und wenigstens ein Ventil (5), mit welchem die wenigstens eine Auslassöffnung (4) gesteuert öffenbar und verschließbar ist, wodurch eine vorbestimmte Dosis (49) des Wasser-Bindemitte-Gemischs (2) durch die wenigstens eine Auslassöffnung (4) abgebbar ist, umfasst.

11. Anlage (53) nach Anspruch 10, wobei
- der Druckkopf (1) wenigstens einen Grundkörper (6), an welchem das wenigstens eine Ventil (5) angeordnet ist, und wenigstens einen mit dem wenigstens einen Grundkörper (6) lösbar verbindbaren Wechselkörper (7) aufweist, wobei am wenigstens einen Wechselkörper (7) die wenigstens eine Auslassöffnung (4) und/oder der wenigstens eine Zuführkanal (3) angeordnet sind, und/oder
- wenigstens eine, vorzugsweise austauschbare, Dichtmembran (17) vorgesehen ist, welche wenigstens ein bewegbares Teil des wenigstens einen Ventils (5), vorzugsweise eine Ventilstange (14), gegen ein Eindringen des Wasser-Bindemittel-Gemischs (2) abdichtet, und/oder
- die wenigstens eine Auslassöffnung (4) in einem Düsenkörper (18) ausgebildet ist, vorzugsweise wobei der Düsenkörper (18) wenigstens eine schräge, vorzugsweise trichterförmige, Anpressfläche (19) für ein freies Ende (15) einer Ventilstange (14) des wenigstens einen Ventils (5) aufweist, und/oder
- der wenigstens eine Zuführkanal (3) wenigstens eine Eingangsöffnung (21) für das Wasser-Bindemittel-Gemisch (2) aufweist, bevorzugt wobei der wenigstens eine Zuführkanal (3) wenigstens eine der wenigstens einen Eingangsöffnung (21) gegenüber liegende Ausgangsöffnung (22) aufweist, besonders bevorzugt wobei die wenigstens eine Eingangsöffnung (21) und/oder die wenigstens eine Ausgangsöffnung (22) ein Gewinde (23) zum Anschluss einer Fluidleitung (24) aufweist, und/oder
- der Druckkopf (1) wenigstens einen Entlüftungskanal (25) aufweist, mit welchem ein Druckausgleich für wenigstens ein bewegbares Teil des wenigstens einen Ventils (5), vorzugsweise eine Ventilstange (14), erzeugbar ist, und/oder
- wenigstens eine Steuer- und/oder Regelungsvorrichtung (26) vorgesehen ist, mit welcher das wenigstens eine Ventil (5) steuerbar ist, und/oder
- der Druckkopf (1) eine Vielzahl an Auslassöffnungen (4) umfasst, wobei die Auslassöffnungen (4), vorzugsweise äquidistant, auf wenigstens einer Linie (27) angeordnet sind.

12. Anlage (53) nach einem der Ansprüche 1 bis 11, wobei
- das wenigstens eine hydraulische Bindemittel ausgewählt ist aus einer Gruppe bestehend aus Portlandzement, Calciumaluminatzement, Calciumsulfoaluminatzement und Mischungen davon, und/oder
- das Wasser-Bindemittel-Gemisch (2) wenigstens einen Zusatzstoff, vorzugsweise wenigstens ein Fließmittel, umfasst.

13. Verfahren zur Herstellung eines, vorzugsweise flächigen, Betonfertigbauelements (54) mittels einer Anlage (53) nach einem der Ansprüche 1 bis 12, wobei die folgenden Verfahrensschritte:
- in der wenigstens einen 3D-Druckstation (29) wird in einem ersten Druckverfahrensschritt mittels der wenigstens einen Schichtablagevorrichtung (30) wenigstens eine Schicht (34, 35, 36) des wenigstens einen partikelförmigen Zuschlagstoffs (31) auf der Produktionspalette (32) abgelegt und in einem zweiten Druckverfahrensschritt mittels des wenigstens einen Druckkopfs (1) eine vorbestimmte Dosis (49) des wenigstens einen Wasser-Bindemittel-Gemischs (2) an wenigstens einem örtlich vorbestimmten Bereich (33) der wenigstens einen Schicht (34, 35, 36) des wenigstens einen Zuschlagstoffs (31) abgegeben, vorzugsweise wobei die beiden Druckverfahrensschritte wiederholt und/oder in umgekehrter Reigenfolge durchgeführt werden,
- der wenigstens eine partikelförmige Zuschlagstoff (31) wird aus der wenigstens einen Speichervorrichtung (56) mittels der wenigstens einen Fördervorrichtung (57) zur wenigstens einen Schichtablagevorrichtung (30) der wenigstens eine 3D-Druckstation (29) befördert,
- das wenigstens eine Wasser-Bindemittel-Gemisch (2) wird in der wenigstens einen Mischvorrichtung (58) bereitgestellt und mittels der wenigstens einen Zuführvorrichtung (59) dem wenigstens einen Druckkopf (1) der wenigstens einen 3D-Druckstation (29) zugeführt,
- die wenigstens eine Produktionspalette (32) wird mittels des wenigstens einen Transportsystems von der wenigstens einen 3D-Druckstation (29) zur wenigstens einen Entpackungsstation (60) transportiert, und
- ein in der wenigstens einen 3D-Druckstation (29) auf der wenigstens einen Produktionspalette (32) gedrucktes Betonfertigbauelement (54) wird in der wenigstens einen Entpackungsstation (60) von einem nichtgebundenen partikelförmigen Zuschlagstoff (31) entpackt.

14. Verfahren nach Anspruch 13, wobei
- vor der Ablage einer ersten Schicht (34) des wenigstens einen Zuschlagstoffs (31) auf der Produktionspalette (32) eine vorbestimmte Dosis (49) des wenigstens einen Wasser-Bindemittel-Gemischs (2) an wenigstens einem örtlich vorbestimmten Bereich (33) der Druckplattform (32) abgegeben wird, und/oder
- nach der Ablage einer letzten Schicht (36) des wenigstens einen Zuschlagstoffs (31) eine vorbestimmte Dosis (49) des Wasser-Bindemittel-Gemischs (2) an wenigstens einem örtlich vorbestimmten Bereich (33) der letzten Schicht (36) des wenigstens einen Zuschlagstoffs (31) abgegeben wird und/oder
- mittels des Verfahrens Betonfertigbauelemente (54) in Form von Wand- oder Deckenelementen für Gebäude hergestellt werden und/oder
- die Anlage (53) wenigstens einen Stellplatz (55) für die wenigstens eine Produktionspalette (32) umfasst und die wenigstens eine Produktionspalette (32) in einem weiteren Verfahrensschritt mittels des wenigstens einen Transportsystems von dem wenigstens einen Stellplatz (55) zur wenigstens einen 3D-Druckstation (29) transportiert wird.

15. Verfahren nach einem der Ansprüche 13 oder 14, wobei wenigstens eine Außenseite des Betonfertigbauelements (54) im Zuge der Druckverfahrensschritte mit einer vorbestimmten Oberflächenstruktur versehen wird.

## Claims

1. A plant (53) for producing a, preferably flat, concrete prefabricated component (54), comprising several stations, through which at least one production pallet (32) can pass, in particular in a circulating manner, wherein the plant (53) comprises at least one transport system, with which the at least one production pallet (32) can be transported through the plant (53), wherein the plant (53) further comprises
- at least one 3D printing station (29) with at least one layer depositing device (30) for depositing in layers at least one particulate aggregate (31) on the at least one production pallet (32) and at least one printhead (1) for the controlled delivery of at least one water-binder mixture (2), comprising water and at least one hydraulic binder, in particular a cement-based binder, at at least one locally predetermined region (33) of the production pallet (32) and/or a layer (34, 35, 36) of the at least one aggregate (31) deposited on the production pallet (32) by the at least one layer depositing device (30),
- at least one storage device (56) in which the at least one particulate aggregate (31) is stored,
- at least one conveying device (57), with which the at least one particulate aggregate (31) stored in the at least one storage device (56) can be conveyed to the at least one layer depositing device (30) of the at least one 3D printing station (29), and
- at least one unpacking station (60), in which a concrete prefabricated component (54) printed on the at least one production pallet (32) in the at least one 3D printing station (29) can be unpacked from an unbound particulate aggregate (31), **characterized in that** the plant further comprises:
- the at least one water-binder mixture (2), wherein the at least one water-binder mixture (2) contains water and at least one hydraulic binder, in particular a cement-based binder,
- at least one mixing device (58), with which the at least one water-binder mixture (2) can be provided,
- at least one feed device (59), with which the at least one water-binder mixture (2) provided by the at least one mixing device (58) can be fed to the at least one printhead (1) of the at least one 3D printing station (29) .

2. The plant (53) according to claim 1, wherein the water-binder mixture (2) that can be delivered by the at least one printhead (1) comprises water and at least one cement-based binder, and wherein the plant (53) comprises at least one cement storage device (61), in which cement can be stored, and/or at least one bag loading station (62) for cement bags, wherein the at least one cement storage device (61) and/or the at least one bag loading station (62) are in cement-channeling connection with the at least one mixing device (58), with which the at least one water-binder mixture (2) can be provided.

3. The plant (53) according to claim 1 or 2, wherein the at least one layer depositing device (30) of the at least one 3D printing station (29)
- has several segments (63), which are individually activatable and deactivatable in order to achieve a predetermined layer depositing width (64), and/or
- comprises at least one metering roller (65), via which the at least one particulate aggregate (31) can be applied to the at least one production pallet (32), and/or
- comprises at least one depositing funnel (66), preferably wherein at least one vibration device is provided, with which the at least one depositing funnel (66) can be made to vibrate, with the result that a twisting of coarse-grained material can be prevented, and/or
- has at least one delivery opening (67) and at least one metering flap (68), with which the at least one delivery opening (67) can be closed to different extents, with the result that a delivered quantity of the at least one particulate aggregate (31) can be metered.

4. The plant (53) according to one of claims 1 to 3, wherein the at least one 3D printing station (29)
- comprises at least one further layer depositing device (69) for depositing in layers at least one insulation material (70), preferably wherein the plant (53) comprises at least one further storage device (71), in which the at least one insulation material (70) is stored, and at least one further conveying device (72), with which the at least one insulation material (70) stored in the at least one further storage device (71) can be conveyed to the at least one further layer depositing device (30) of the at least one 3D printing station (29), and/or
- comprises at least one suction device for extracting unbound particulate aggregate (31).

5. The plant (53) according to one of claims 1 to 4, wherein the plant (53) comprises at least one production pallet (32), preferably wherein the at least one production pallet (32)
- has a length (73), and the at least one 3D printing station (29) has a length (74), particularly preferably wherein the length (74) of the at least one 3D printing station (29) is at least twice as large as the length (73) of the at least one production pallet (32), and/or
- comprises at least one side limit (75) displaceable on the at least one production pallet (32), and/or
- comprises at least one height-adjustable side limit (76), preferably wherein the at least one height-adjustable side limit (76) can be brought into a first position on the at least one production pallet (32), in which the at least one side limit (76) laterally delimits a volume that can be printed on the at least one production pallet (32), and into at least one second position, in which a top (77) of the at least one side limit (76) is substantially aligned with a top (78) of the at least one production pallet (32).

6. The plant (53) according to one of claims 1 to 5, wherein the plant (53) comprises at least one drying station (79), in which the at least one production pallet (32) can be arranged in order to cure a concrete prefabricated component (54) printed on the at least one production pallet (32) in the at least one 3D printing station (29), preferably wherein the at least one drying station (79)
- comprises at least one heating device (80), and/or
- comprises at least one pallet rack (81) in order to arrange at least two production pallets (32) one above another in the at least one drying station (79), and/or
- is arranged after the at least one 3D printing station (29) in the production direction.

7. The plant (53) according to one of claims 1 to 6, wherein the at least one unpacking station (60) comprises
- at least one tilting device (83), and/or
- at least one removal device (84) for removing the unbound particulate aggregate (31), and/or
- at least one recirculation device (85), with which the unbound particulate aggregate (31) can be fed back into the at least one storage device (56), and/or
- at least one separating device (86) for separating the at least one particulate aggregate (31) from at least one further substance applied to the at least one production pallet (32) by means of the at least one 3D printing station (29), preferably wherein the at least one separating device (86) has at least one sieve and/or at least one air separator.

8. The plant (53) according to one of claims 1 to 7, wherein the plant (53)
- comprises at least one preparation station (87) for preparing the at least one production pallet (32), preferably wherein the at least one preparation station (87) has at least one cleaning agent and/or release agent spraying device, and/or
- is formed without formwork robots, and/or
- comprises at least one holding area (55) for the at least one production pallet (32), and/or
- comprises at least one straightening machine (88), at least one reinforcement welding device (89) and/or at least one reinforcement depositing device (90), with which at least one reinforcement (91) can be arranged on the at least one production pallet (32) arranged in the at least one 3D printing station (29).

9. The plant (53) according to one of claims 1 to 8, wherein the at least one 3D printing station (29)
- has at least two guide rails (92), on which the at least one layer depositing device (30) and/or the at least one printhead (1) are movable in a plane parallel to the at least one production pallet (32), and/or
- comprises at least one height-adjustment device, with which a distance (93) of the at least one layer depositing device (30) or a part of the at least one layer depositing device (30) and/or the at least one printhead (1) from a production pallet (32) arranged in the at least one 3D printing station (29) is alterable in the vertical direction (37) depending on a print advancement.

10. The plant (53) according to one of claims 1 to 9, wherein the at least one printhead (1) of the at least one 3D printing station (29) comprises at least one feed channel (3) for feeding the water-binder mixture (2) in, at least one outlet opening (4), which can be brought into fluid connection with the at least one feed channel (3), and at least one valve (5), with which the at least one outlet opening (4) can be opened and closed in a controlled manner, whereby a predetermined dose (49) of the water-binder mixture (2) can be delivered through the at least one outlet opening (4).

11. The plant (53) according to claim 10, wherein
- the printhead (1) has at least one base body (6), on which the at least one valve (5) is arranged, and at least one removable body (7) releasably connectable to the at least one base body (6), wherein the at least one outlet opening (4) and/or the at least one feed channel (3) are arranged on the at least one removable body (7), and/or
- at least one, preferably replaceable, seal membrane (17) is provided, which seals at least one movable part of the at least one valve (5), preferably a valve rod (14), against a penetration of the water-binder mixture (2), and/or
- the at least one outlet opening (4) is formed in a nozzle body (18), preferably wherein the nozzle body (18) has at least one inclined, preferably funnel-shaped, contact surface (19) for a free end (15) of a valve rod (14) of the at least one valve (5), and/or
- the at least one feed channel (3) has at least one inlet opening (21) for the water-binder mixture (2), preferably wherein the at least one feed channel (3) has at least one outlet opening (22) lying opposite the at least one inlet opening (21), particularly preferably wherein the at least one inlet opening (21) and/or the at least one outlet opening (22) has a thread (23) for the connection of a fluid line (24), and/or
- the printhead (1) has at least one air-exhaust channel (25), with which a pressure equalization can be generated for at least one movable part of the at least one valve (5), preferably a valve rod (14), and/or
- at least one control and/or regulating device (26) is provided, with which the at least one valve (5) can be controlled, and/or
- the printhead (1) comprises a plurality of outlet openings (4), wherein the outlet openings (4) are arranged, preferably equidistant, on at least one line (27).

12. The plant (53) according to one of claims 1 to 11, wherein
- the at least one hydraulic binder is selected from a group consisting of Portland cement, calcium aluminate cement, calcium sulfoaluminate cement and mixtures thereof, and/or
- the water-binder mixture (2) comprises at least one additive, preferably at least one superplasticizer.

13. A method for producing a, preferably flat, concrete prefabricated component (54) by means of a plant (53) according to one of claims 1 to 12, comprising the following method steps:
- in the at least one 3D printing station (29), at least one layer (34, 35, 36) of the at least one particulate aggregate (31) is deposited on the production pallet (32) by means of the at least one layer depositing device (30) in a first printing method step and a predetermined dose (49) of the at least one water-binder mixture (2) is delivered at at least one locally predetermined region (33) of the at least one layer (34, 35, 36) of the at least one aggregate (31) by means of the at least one printhead (1) in a second printing method step, preferably wherein the two printing method steps are repeated and/or carried out in reverse order,
- the at least one particulate aggregate (31) is conveyed from the at least one storage device (56) to the at least one layer depositing device (30) of the at least one 3D printing station (29) by means of the at least one conveying device (57),
- the at least one water-binder mixture (2) is provided in the at least one mixing device (58) and fed to the at least one printhead (1) of the at least one 3D printing station (29) by means of the at least one feed device (59),
- the at least one production pallet (32) is transported from the at least one 3D printing station (29) to the at least one unpacking station (60) by means of the at least one transport system, and
- a concrete prefabricated component (54) printed on the at least one production pallet (32) in the at least one 3D printing station (29) is unpacked from an unbound particulate aggregate (31) in the at least one unpacking station (60).

14. The method according to claim 13, wherein
- a predetermined dose (49) of the at least one water-binder mixture (2) is delivered at at least one locally predetermined region (33) of the printing platform (32) before a first layer (34) of the at least one aggregate (31) is deposited on the production pallet (32), and/or
- a predetermined dose (49) of the water-binder mixture (2) is delivered at at least one locally predetermined region (33) of the last layer (36) of the at least one aggregate (31) after a last layer (36) of the at least one aggregate (31) has been deposited, and/or
- concrete prefabricated components (54) in the form of wall or ceiling elements for buildings are produced by means of the method, and/or
- the plant (53) comprises at least one holding area (55) for the at least one production pallet (32) and the at least one production pallet (32) is transported from the at least one holding area (55) to the at least one 3D printing station (29) by means of the at least one transport system in a further method step.

15. The method according to one of claims 13 or 14, wherein at least one outside of the concrete prefabricated component (54) is provided with a predetermined surface structure in the course of the printing method steps.

## Revendications

1. Installation (53) de fabrication d'un élément de construction préfabriqué en béton (54) de préférence plat, comprenant plusieurs postes, qui peut être traversée par au moins une palette de production (32), en particulier en périphérie, dans laquelle l'installation (53) comprend au moins un système de transport, avec lequel l'au moins une palette de production (32) peut être transportée à travers l'installation (53), dans laquelle l'installation (53) comprend par ailleurs
- au moins un poste d'impression 3D (29) avec au moins un dispositif de dépôt de couche (30) destiné à déposer couche par couche au moins un granulat (31) sous forme de particules sur l'au moins une palette de production (32) et au moins une tête d'impression (1) destinée à distribuer de manière commandée au moins un mélange d'eau et de liant (2), comprenant de l'eau et au moins un liant hydraulique, en particulier un liant cimentaire, à au moins une zone (33) prédéfinie localement de la palette de production (32) et/ou à une couche (34, 35, 36) de l'au moins un granulat (31) déposée par l'au moins un dispositif de dépôt de couche (30) sur la palette de production (32),
- au moins un dispositif de stockage (56), dans lequel l'au moins un granulat (31) sous forme de particules est stocké,
- au moins un dispositif de convoyage (57), avec lequel l'au moins un granulat (31) sous forme de particules stocké dans l'au moins un dispositif de stockage (56) peut être convoyé à au moins un dispositif de dépôt de couche (30) de l'au moins un poste d'impression 3D (29), et
- au moins un poste d'extraction (60), dans lequel un élément de construction préfabriqué en béton (54) imprimé dans l'au moins un poste d'impression 3D (29) sur l'au moins une palette de production (32) peut être extrait d'un granulat (31) sous forme particulaire non lié, **caractérisée en ce que** l'installation comprend par ailleurs :
- l'au moins un mélange d'eau et de liant (2), dans laquelle l'au moins un mélange d'eau et de liant (2) présente de l'eau et au moins un liant hydraulique, en particulier un liant cimentaire,
- au moins un dispositif de mélange (58), avec lequel l'au moins un mélange d'eau et de liant (2) peut être fourni,
- au moins un dispositif d'amenée (59), avec lequel l'au moins un mélange d'eau et de liant (2) fourni par l'au moins un dispositif de mélange (58) peut être amené à l'au moins une tête d'impression (1) de l'au moins un poste d'impression 3D (29).

2. Installation (53) selon la revendication 1, dans laquelle le mélange d'eau et de liant (2) pouvant être distribué par l'au moins une tête d'impression (1) comprend de l'eau et au moins un liant cimentaire, et dans laquelle l'installation (53) comprend au moins un dispositif de stockage de ciment (61), dans lequel du ciment peut être stocké, et/ou au moins un poste de chargement de sacs (62) pour des sacs de ciment, dans laquelle l'au moins un dispositif de stockage de ciment (61) et/ou l'au moins un poste de chargement de sacs (62) sont reliés tout en acheminant du ciment à l'au moins un dispositif de mélange (58), avec lequel l'au moins un mélange d'eau et de liant (2) peut être fourni.

3. Installation (53) selon la revendication 1 ou 2, dans laquelle l'au moins un dispositif de dépôt de couche (30) de l'au moins un poste d'impression 3D (29)
- présente plusieurs segments (63), qui peuvent être activés et désactivés individuellement pour obtenir une largeur de dépôt de couche (64) prédéfinie, et/ou
- au moins un cylindre de dosage (65), par l'intermédiaire duquel l'au moins un granulat (31) sous forme de particules peut être appliqué sur l'au moins une palette de production (32), et/ou
- au moins une trémie de dépôt (66), de préférence dans laquelle au moins un dispositif de vibration est prévu, avec lequel l'au moins une trémie de dépôt (66) peut être amenée en vibration, si bien qu'un gauchissement de matériau granulaire peut être empêché,
et/ou
- au moins une ouverture de distribution (67) et au moins un clapet de dosage (68), par lequel l'au moins une ouverture de distribution (67) peut être fermée avec une largeur différente si bien qu'une quantité de distribution de l'au moins un granulat (31) sous forme de particules peut être dosé.

4. Installation (53) selon l'une quelconque des revendications 1 à 3, dans laquelle l'au moins un poste d'impression 3D (29)
- comprend au moins un autre dispositif de dépôt de couche (69) destiné à déposer couche par couche au moins un matériau isolant (70), de préférence dans laquelle l'installation (53) comprend au moins un autre dispositif de stockage (71), dans lequel l'au moins un matériau isolant (70) est stocké, et au moins un autre dispositif de convoyage (72), avec lequel l'au moins un matériau isolant (70) stocké dans l'au moins un autre dispositif de stockage (71) peut être convoyé vers l'au moins un autre dispositif de dépôt de couche (30) de l'au moins un poste d'impression 3D (29), et/ou
- au moins un dispositif d'aspiration destiné à évacuer par aspiration du granulat (31) sous forme de particules non lié.

5. Installation (53) selon l'une quelconque des revendications 1 à 4, dans laquelle l'installation (53) comprend au moins une palette de production (32), de préférence dans laquelle l'au moins une palette de production (32)
- présente une longueur (73) et l'au moins un poste d'impression 3D (29) présente une longueur (74), de manière particulièrement préférée dans laquelle la longueur (74) de l'au moins un poste d'impression 3D (29) est au moins deux fois plus grande que la longueur (73) de l'au moins une palette de production (32),
et/ou
- comprend au moins une délimitation latérale (75) pouvant être coulissée sur l'au moins une palette de production (32), et/ou
- comprend au moins une délimitation latérale ajustable en hauteur (76), de préférence dans laquelle l'au moins une délimitation latérale ajustable en hauteur (76) peut être amenée dans une première position sur l'au moins une palette de production (32), dans laquelle l'au moins une délimitation latérale (76) délimite latéralement un volume pouvant être imprimé sur l'au moins une palette de production (32), et dans au moins une deuxième position, dans laquelle un côté supérieur (77) de l'au moins une délimitation latérale (76) est en affleurement sensiblement avec un côté supérieur (78) de l'au moins une palette de production (32).

6. Installation (53) selon l'une quelconque des revendications 1 à 5, dans laquelle l'installation (53) présente au moins un poste de séchage (79), dans lequel l'au moins une palette de production (32) peut être disposée pour faire durcir un élément de construction préfabriqué en béton (54) imprimé sur l'au moins une palette de production (32) dans l'au moins une poste d'impression 3D (29), de préférence dans laquelle l'au moins un poste de séchage (79)
- comprend au moins un dispositif de chauffage (80),
et/ou
- comprend au moins une installation à rayonnages (81) pour disposer au moins deux palettes de production (32) l'une au-dessus de l'autre dans l'au moins un poste de séchage (79), et/ou
- est disposé après l'au moins un poste d'impression 3D (29) dans la direction de production.

7. Installation (53) selon l'une quelconque des revendications 1 à 6, dans laquelle l'au moins un poste d'extraction (60) comprend
- au moins un dispositif de basculement (83), et/ou
- au moins un dispositif d'évacuation (84) destiné à évacuer le granulat (31) sous forme de particules non lié, et/ou
- au moins un dispositif de rapatriement (85), avec lequel le granulat (31) sous forme de particules non lié peut être rapatrié dans l'au moins un dispositif de stockage (56),
et/ou
- au moins un dispositif de séparation (86) destiné à séparer l'au moins un granulat (31) sous forme de particules d'au moins une autre matière appliquée sur l'au moins une palette de production (32) au moyen de l'au moins un poste d'impression 3D (29), de préférence dans laquelle l'au moins un dispositif de séparation (86) présente au moins un tamis et/ou au moins un séparateur pneumatique.

8. Installation (53) selon l'une quelconque des revendications 1 à 7, dans laquelle l'installation (53)
- comprend au moins un poste de préparation (87) destiné à préparer l'au moins une palette de production (32), de préférence dans laquelle l'au moins un poste de préparation (87) présente au moins un système de pulvérisation de produit de nettoyage et/ou de produit de séparation, et/ou
- est réalisée sans robot de coffrage, et/ou
- comprend au moins un emplacement (55) pour l'au moins une palette de production (32),
et/ou
- comprend au moins une machine à dresser (88), au moins un dispositif de soudage d'armature (89) et/ou au moins un dispositif de dépôt d'armature (90), avec lequel au moins une armature (91) peut être disposée sur l'au moins une palette de production (32) disposée dans l'au moins un poste d'impression 3D (29).

9. Installation (53) selon l'une quelconque des revendications 1 à 8, dans laquelle l'au moins un poste d'impression 3D (29)
- présente au moins deux rails de guidage (92), sur lesquels l'au moins un dispositif de dépôt de couche (30) et/ou l'au moins une tête d'impression (1) peuvent être déplacés dans un plan de manière parallèle à l'au moins une palette de production (32), et/ou
- comprend au moins un dispositif d'ajustement en hauteur, avec lequel une distance (93) de l'au moins un dispositif de dépôt de couche (30) ou d'une partie de l'au moins un dispositif de dépôt de couche (30) et/ou de l'au moins une tête d'impression (1) par rapport à une palette de production (32) disposée dans l'au moins un poste d'impression 3D (29) peut être modifiée dans une direction verticale (37) en fonction d'une progression d'impression.

10. Installation (53) selon l'une quelconque des revendications 1 à 9, dans laquelle l'au moins une tête d'impression (1) de l'au moins un poste d'impression 3D (29) comprend au moins un canal d'amenée (3) destiné à amener le mélange d'eau et de liant (2), au moins une ouverture de sortie (4), laquelle peut être amenée en communication fluidique avec l'au moins un canal d'amenée (3), et au moins une soupape (5), avec laquelle l'au moins une ouverture de sortie (4) peut être ouverte et fermée de manière commandée, ce qui permet de distribuer une dose prédéfinie (49) du mélange d'eau et de liant (2) par l'au moins une ouverture de sortie (4).

11. Installation (53) selon la revendication 10, dans laquelle
- la tête d'impression (1) présente au moins un corps de base (6), sur lequel l'au moins une soupape (5) est disposée, et au moins un corps de remplacement (7) pouvant être relié de manière amovible à l'au moins un corps de base (6), dans laquelle l'au moins une ouverture de sortie (4) et/ou l'au moins un canal d'amenée (3) sont disposés sur l'au moins un corps de remplacement (7), et/ou
- au moins une membrane étanche (17) de préférence interchangeable est prévue, laquelle étanchéifie au moins une partie mobile de l'au moins une soupape (5), de préférence une tige de soupape (14), pour empêcher toute infiltration du mélange d'eau et de liant (2), et/ou
- l'au moins une ouverture d'évacuation (4) est réalisée dans un corps de buse (18), de préférence dans laquelle le corps de buse (18) présente au moins une face de pression (19) oblique, de préférence en forme d'entonnoir, pour une extrémité libre (15) d'une tige de soupape (14) de l'au moins une soupape (5), et/ou
- l'au moins un canal d'amenée (3) présente au moins une ouverture d'entrée (21) pour le mélange d'eau et de liant (2), de manière préférée dans laquelle l'au moins un canal d'amenée (3) présente au moins une ouverture de sortie (22) faisant face à l'au moins une ouverture d'entrée (21), de manière particulièrement préférée dans laquelle l'au moins une ouverture d'entrée (21) et/ou l'au moins une ouverture de sortie (22) présentent un filetage (23) pour le raccordement d'une conduite de fluide (24), et/ou
- la tête d'impression (1) présente au moins un canal d'évacuation de l'air (25), avec lequel une compensation de pression pour au moins une partie mobile de l'au moins une soupape (5), de préférence une tige de soupape (14), peut être générée, et/ou
- au moins un dispositif de commande et/ou de régulation (26) est prévu, avec lequel l'au moins une soupape (5) peut être commandée, et/ou
- la tête d'impression (1) comprend une pluralité d'ouvertures d'évacuation (4), dans lequel les ouvertures d'évacuation (4) sont disposées de préférence de manière équidistante sur au moins une ligne (27).

12. Installation (53) selon l'une quelconque des revendications 1 à 11,
dans laquelle
- l'au moins un liant hydraulique est choisi parmi un groupe constitué de ciment de Portland, de ciment d'aluminate de calcium, de ciment de sulfoaluminate de calcium, et de mélanges de ceux-ci,
et/ou
- le mélange d'eau et de liant (2) comprend au moins une matière supplémentaire, de préférence au moins un agent d'écoulement.

13. Procédé de fabrication d'un élément de construction préfabriqué en béton (54) de préférence plat au moyen d'une installation (53) selon l'une quelconque des revendications 1 à 12, dans lequel les étapes de procédé suivantes sont mises en oeuvre :
- dans l'au moins un poste d'impression 3D (29), dans une première étape de procédé d'impression, au moins une couche (34, 35, 36) de l'au moins un granulat (31) sous forme de particules est déposée sur la palette de production (32) au moyen de l'au moins un dispositif de dépôt de couche (30), et, dans une deuxième étape de procédé d'impression, une dose (49) prédéfinie de l'au moins un mélange d'eau et de liant (2) est distribuée à au moins une zone (33) prédéfinie localement de l'au moins une couche (34, 35, 36) de l'au moins un granulat (31) au moyen de l'au moins une tête d'impression (1), de préférence dans lequel les deux étapes de procédé d'impression sont répétées et/ou sont mises en oeuvre dans un ordre inverse,
- l'au moins un granulat (31) sous forme de particules est convoyé depuis l'au moins un dispositif de stockage (56) au moyen de l'au moins un dispositif de convoyage (57) à l'au moins un dispositif de dépôt de couche (30) de l'au moins un poste d'impression 3D (29),
- l'au moins un mélange d'eau et de liant (2) est fourni dans l'au moins un dispositif de mélange (58) et est amené à l'au moins une tête d'impression (1) de l'au moins un poste d'impression 3D (29) au moyen de l'au moins un dispositif d'amenée (59),
- l'au moins une palette de production (32) est transportée au moyen de l'au moins un système de transport depuis l'au moins un poste d'impression 3D (29) à l'au moins un poste d'extraction (60), et
- un élément de fabrication préfabriqué en béton (54) imprimé sur l'au moins une palette de production (32) dans l'au moins un poste d'impression 3D (29) est extrait dans l'au moins un poste d'extraction (60) d'un granulat (31) sous forme de particules non lié.

14. Procédé selon la revendication 13, dans lequel
- avant le dépôt d'une première couche (34) de l'au moins un granulat (31) sur la palette de production (32), une dose (49) prédéfinie de l'au moins un mélange d'eau et de liant (2) est distribuée à au moins une zone (33) prédéfinie localement de la plateforme d'impression (32), et/ou
- après le dépôt d'une dernière couche (36) de l'au moins un granulat (31), une dose (49) prédéfinie du mélange d'eau et de liant (2) est distribuée à au moins une zone (33) prédéfinie localement de la dernière couche (36) de l'au moins un granulat (31), et/ou
- des éléments de construction préfabriqués en béton (54) sont fabriqués sous la forme d'éléments de mur ou de plafond pour des bâtiments au moyen du procédé, et/ou
- l'installation (53) comprend au moins un emplacement (55) pour l'au moins une palette de production (32), et l'au moins une palette de production (32) est transportée dans une autre étape de procédé au moyen de l'au moins un système de transport depuis l'au moins un emplacement (55) vers l'au moins un poste d'impression 3D (29).

15. Procédé selon l'une quelconque des revendications 13 ou 14, dans lequel au moins un côté extérieur de l'élément de construction préfabriqué en béton (54) est pourvu d'une structure de surface prédéfinie dans le cadre des étapes de procédé d'impression.
